(19) Europäisches Patentamt / European Patent Office / Office européen des brevets

(11) **EP 3 315 561 A1**

# EUROPEAN PATENT APPLICATION
published in accordance with Art. 153(4) EPC

(43) Date of publication:
**02.05.2018 Bulletin 2018/18**

(21) Application number: **16848522.5**

(22) Date of filing: **09.09.2016**

(51) Int Cl.:
**C08L 101/00** *(2006.01)* **C08F 2/44** *(2006.01)*
**C08J 3/075** *(2006.01)* **C08K 3/00** *(2018.01)*
**C08K 5/053** *(2006.01)*

(86) International application number:
**PCT/JP2016/076707**

(87) International publication number:
**WO 2017/051734 (30.03.2017 Gazette 2017/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 25.09.2015 JP 2015188867
25.09.2015 JP 2015188874
25.03.2016 JP 2016061864
29.03.2016 JP 2016066221
29.03.2016 JP 2016066215

(71) Applicant: **Sekisui Plastics Co., Ltd.
Osaka-shi, Osaka 530-0047 (JP)**

(72) Inventors:
• **NISHIUMI, Kengo**
**Tenri-shi**
**Nara 632-0007 (JP)**
• **AKUTA, Ryo**
**Tenri-shi**
**Nara 632-0007 (JP)**
• **OKAMOTO, Koichiro**
**Tenri-shi**
**Nara 632-0007 (JP)**
• **SASAHARA, Shuichi**
**Tenri-shi**
**Nara 632-0007 (JP)**

(74) Representative: **Hoffmann Eitle
Patent- und Rechtsanwälte PartmbB
Arabellastraße 30
81925 München (DE)**

(54) **HYDROGEL AND METHOD FOR PRODUCING SAME**

(57) A hydrogel comprising water, a gel strength improving agent, and a polymer matrix containing the water and the gel strength improving agent, in which the polymer matrix includes a copolymer of a monofunctional monomer having one ethylenically unsaturated group and a polyfunctional monomer having 2 to 6 ethylenically unsaturated groups, the copolymer has a hydrophilic group binding to its main chain, and the hydrogel has a breaking strength of 5 kPa or more and a breaking elongation of 200% or more in a tensile test.

**Description**

TECHNICAL FIELD

The present invention relates to a hydrogel and a method for producing the same. The hydrogel of the present invention can be suitably used in utility requiring the strength and alkali resistance, such as an alkaline secondary battery, a backfill for an electrolytic corrosion protection step, a member for re-alkalization, and a member for desalting.

BACKGROUND TECHNOLOGY

A hydrogel contains water, a moisturizing agent or the like, in a polymer matrix having a three-dimensional network structure in which hydrophilic polymer chains are crosslinked. Additionally, by containing or retaining an aqueous solution containing an electrolyte, electrical conductivity can be imparted. For example, the hydrogel can be used in an electrolyte of a bioelectrode or a battery or the like, and has wide utility in the medical field and the industrial field. Particularly, in the field of an alkaline secondary battery, in order to enhance safety, gelation of an alkali electrolyte using the hydrogel has been paid attention from long ago.

A nickel-hydrogen secondary battery and a nickel-zinc secondary battery which is paid attention as a next generation secondary battery use an aqueous solution for an electrolytic solution. For that reason, these secondary batteries have high safety as compared with a non-aqueous secondary battery, such as a lithium ion secondary battery, which uses an organic solvent for an electrolytic solution. Since an aqueous alkali solution having the high concentration is, however, used as an electrolytic solution, the aqueous alkali solution may cause damage on the skin or may damage clothing, when attached to the skin or clothing due to liquid leakage. By retaining an electrolytic solution in the hydrogel, liquid leakage can be prevented, and safe and stable use of a battery becomes possible for a long period of time.

As an example in which the hydrogel is used for retaining an electrolytic solution, there are International Publication No. WO 2002-023663 (Patent Document 1) and Japanese Unexamined Patent Application, First Publication No. 2007-227032 (Patent Document 2). In Patent Document 1, an aqueous potassium hydroxide solution, carboxymethylcellulose, and a polytetrafluoroethylene powder are mixed into crosslinked potassium polyacrylate to obtain a mixture, the mixture is gelled, thereafter, the gelled mixture is coated on a glass plate, dried, and peeled, thereby, a sheet-like gel is obtained, the sheet-like gel is rolled to the objective thickness, thereby, a sheet-like hydrogel is prepared. Additionally, in Patent Document 2, hydrotalcite having a layered structure is made to retain an aqueous alkali hydroxide solution, thereby, a hydrogel composed of an inorganic substance is prepared. Such a hydrogel has been used for improving safety for use of an electrolytic solution or as an effective approach for suppressing change in a form of an electrode active material.

Generally, the hydrogel has the excellent compression strength, but has the low tensile breaking strength, and is difficult to use as a self-supported film. For this reason, use of the hydrogel as a general alkali electrolyte is merely addition as a gelling agent for the purpose of increasing the viscosity, and the hydrogel as a self-supported film having the sufficient mechanical strength has been developed little.

As a polymer hydrogel electrolyte having the mechanical strength, for example, Japanese Unexamined Patent Application, First Publication No. 2005-322635 (Patent Document 3) discloses a polymer hydrogel electrolyte for an alkali battery, in which alkali hydroxide is contained in a polymer composition composed of polyvinyl alcohol and an anionic crosslinked copolymer,.

PRIOR ART DOCUMENTS

Patent Documents

    Patent Document 1: International Publication No. WO 2002-023663
    Patent Document 2: Japanese Unexamined Patent Application, First Publication No. 2007-227032
    Patent Document 3: Japanese Unexamined Patent Application, First Publication No. 2005-322635

SUMMARY OF THE INVENTION

PROBLEM TO BE SOLVED BY THE INVENTION

The sheet-like hydrogel of Patent Document 1 is composed of an aggregate of crosslinked polymer gels containing an aqueous solution. For that reason, there was a problem that the hydrogel is a brittle gel having small interaction between gels and no elongation, the gel is destructed at the time of peeling from a glass plate and is difficult in handling. Additionally, it was regarded that when the sheet-like hydrogel is prepared, troublesome working steps of coating on a glass plate, drying, peeling, and rolling are necessary.

Since the hydrogel of Patent Document 2 has no elongation and is very brittle, it was difficult in handling. Additionally, there was a problem that since water is discharged with pressure when the hydrogel is pressure-fitted with a positive electrode and a negative electrode, retainability of an electrolytic solution is inferior.

In Patent Document 3, since the water content of an aqueous alkali solution responsible for ionic conduction is low, when used in a battery, sufficient discharge characteristic was not obtained. Additionally, in this polymer composition, the content of an anionic crosslinked copolymer which is a crosslinked material is low and the hydrogel is composed of an aggregate of crosslinked polymer gels. For that reason, the hydrogel is a brittle gel having a small crosslinking degree, small interaction between gels and no elongation. For that reason, when an aqueous alkali solution is contained more in order to secure ionic conductivity, the hydrogel is swollen and the mechanical strength is remarkably reduced with swelling. As a result, there was a problem that the sufficient mechanical strength is not obtained, and the hydrogel cannot be used as a self-supported film.

MEANS FOR SOLVING THE PROBLEM

Thus, according to the present invention, there is provided a hydrogel comprising water, a gel strength improving agent, and a polymer matrix containing the water and the gel strength improving agent, in which

the polymer matrix includes a copolymer of a monofunctional monomer having one ethylenically unsaturated group and a polyfunctional monomer having 2 to 6 ethylenically unsaturated groups,

the copolymer has a hydrophilic group binding to its main chain, and

the hydrogel sheet has a breaking strength of 5 kPa or more and a breaking elongation of 200% or more in a tensile test.

Additionally, according to the present invention, there is provided a method for producing the hydrogel sheet, the method comprising the steps of:

preparing a hydrogel precursor including water, a gel strength improving agent, a monofunctional monomer having one ethylenically unsaturated group, a polyfunctional monomer having 2 to 6 ethylenically unsaturated groups, and a polymerization initiator, and

polymerizing the monofunctional monomer and the polyfunctional monomer to obtain a hydrogel sheet.

EFFECTS OF INVENTION

Since the hydrogel of the present invention itself is not an aggregate of microgels, but includes one bulk gel, the hydrogel has the high mechanical strength (for example, small tension permanent set under constant elongation, excellent tensile breaking strength, and the like) and water retainability even in the state where the water content is high, as compared with an aggregate of crosslinked polymer gels. For that reason, the hydrogel of the present invention can be used in a member for retaining an electrolytic solution, a backfill for an electrolytic corrosion protection method, a re-alkalization method, a desalting method, and the like, which require these properties.

Additionally, since when the copolymer contained in the polymer matrix has no ester bond and no amide bond in its main chain, the hydrogel of the present invention has an alkali-resistant main framework, it can maintain a shape in an aqueous alkali solution. Hence, the hydrogel of the present invention can be particularly suitably used in a secondary battery using an aqueous alkali solution as an electrolytic solution, a method of re-alkalizing concrete, and the like where usage for a long time is desired.

Furthermore, when the hydrogel of the present invention is sheet-like, application to various utilities is possible, by a simple work of only sticking.

Additionally, when the hydrogel of the present invention contains the polyvalent ion-containing compound, it has the higher mechanical strength and restorability than the hydrogel not containing the polyvalent ion-containing compound. The inventors of the present invention think that the reason thereof is that the hydrogel simultaneously has two kinds of structures of an irreversible crosslinked structure due to a chemical crosslinking agent and a reversible ionic crosslinked structure due to the polyvalent ion-containing compound at the time of polymerization.

Furthermore, since addition of the gel strength improving agent to a hydrogel precursor and polymerization forms a S-IPN (Semi-Interpenetrating Polymer Network) structure in which the gel strength improving agent penetrates through a copolymer having a crosslinked network structure, and when the gel strength improving agent is the polyvinyl alcohol-based polymer and/or the cellulose nanofiber, the copolymer and the gel strength improving agent form a hydrogen bond, the hydrogel of the present invention has the further higher mechanical strength than the hydrogel not containing the gel strength improving agent, has the excellent mechanical strength even in the state where the water content is high, and can be used as a self-supported film.

Additionally, upon use in a battery, since in a step of making an aqueous alkali solution to be contained, the gel strength improving agent is going to take the contracted state due to the salting-out effect by the aqueous alkali solution, it is possible to suppress swelling to an alkali, and a step of making an aqueous alkali solution to be contained including a swelling step and a drying step can be considerably shortened as compared with the hydrogel not containing the gel strength improving agent.

Generally, in order to suppress swelling of the hydrogel, a method of increasing an amount of a crosslinking monomer to enhance the crosslinking density, making affinity between a polymer and water small, and the like is considered.

However, when the crosslinking density is improved, swelling can be suppressed and the gel hardness becomes high, but on the other hand, the hydrogel becomes brittle and the breaking strength is reduced. Additionally, when affinity between a polymer and water is made to be small, it is possible to suppress swelling without reducing the breaking strength, but since water retainability is reduced, it results in that an advantage of the hydrogel itself is decreased. It is difficult to realize both of suppression of swelling of the gel and suppression of reduction in the breaking strength, but in the present invention, swelling to an aqueous solution containing an alkali component can be suppressed and the hydrogel can be obtained without reducing the breaking strength and water retainability.

Additionally, according to the present invention, when the invention has the following constituent features, the hydrogel having the higher mechanical strength (for example, small tension permanent set under constant elongation, excellent tensile breaking strength, and the like) and water retainability can be provided.

(1) The gel strength improving agent is selected from a polyhydric alcohol, a polyvalent ion-containing compound, a polyvinyl alcohol-based polymer, and a cellulose nanofiber.

(2) The hydrogel has a sheet-like form and comprises water, a polyhydric alcohol as a gel strength improving agent, and a polymer matrix containing the water and the polyhydric alcohol, in which
the polymer matrix includes a copolymer of a monofunctional monomer having one ethylenically unsaturated group and a polyfunctional monomer having 2 to 6 ethylenically unsaturated groups,
the copolymer has no ester bond and no amide bond in its main chain, and has a hydrophilic group binding to the main chain,
the polymer matrix is contained at 1 to 30 parts by weight in 100 parts by weight of the hydrogel,
a polymer derived from the polyfunctional monomer is contained at a ratio of 0.1 to 5 parts by weight in 100 parts by weight of the copolymer, and
the hydrogel has a breaking strength of 5 kPa or more and a breaking elongation of 200% or more in a tensile test.

(3) The polyhydric alcohol as the gel strength improving agent is contained at 20 to 70 parts by weight in 100 parts by weight of the hydrogel precursor.

(4) The hydrogel comprises water, a polyvinyl alcohol-based polymer and/or a cellulose nanofiber as a gel strength improving agent, and a polymer matrix containing the water and the polyvinyl alcohol-based polymer and/or the cellulose nanofiber, in which
the polymer matrix includes a copolymer of a monofunctional monomer having one ethylenically unsaturated group and a polyfunctional monomer having 2 to 6 ethylenically unsaturated groups,
the copolymer has a hydrophilic group binding to its main chain,
the polymer matrix is contained at 1 to 30 parts by weight in 100 parts by weight of the hydrogel,
a polymer derived from the polyfunctional monomer is contained at a ratio of 0.1 to 5 parts by weight in 100 parts by weight of the copolymer,
when the polyvinyl alcohol-based polymer is contained as the gel strength improving agent, the polyvinyl alcohol-based polymer is contained at 10 to 150 parts by weight based on 100 parts by weight of the polymer matrix,
when the cellulose nanofiber is contained as the gel strength improving agent, the cellulose nanofiber is contained at 1.0 to 50 parts by weight based on 100 parts by weight of the polymer matrix, and
when water is contained in 100 parts by weight of the hydrogel so that a total content of the polymer matrix and the gel strength improving agent becomes 10 parts by weight, the hydrogel exhibits a tensile breaking strength of 10 kPa or more and a tensile breaking elongation of 100% or more.

(5) The hydrogel exhibits a swelling degree of 600% or less in a 4M aqueous potassium hydroxide solution and exhibits (swelling degree in 4M aqueous potassium hydroxide solution)/(swelling degree in ion-exchanged water) of 0.2 or less.

(6) The polyvinyl alcohol-based polymer is a partial saponification product of polyvinyl alcohol, exhibits an average polymerization degree of 500 to 3,000, and exhibits a saponification degree of 80 to 97 mol%.

(7) The cellulose nanofiber exhibits an average fiber diameter of 1 to 200 nm.

(8) The hydrogel comprises a polyhydric alcohol.

(9) The hydrogel comprises water, a polyvalent ion-containing compound as a gel strength improving agent, and a polymer matrix containing the water and the polyvalent ion-containing compound, in which

the polymer matrix includes a copolymer of a monofunctional monomer having one ethylenically unsaturated group and a polyfunctional monomer having 2 to 6 ethylenically unsaturated groups,
the monofunctional monomer has a hydrophilic group, and
when water is contained in 100 parts by weight of the hydrogel so that a total content of the polymer matrix and the polyvalent ion-containing compound becomes 20 parts by weight, the hydrogel exhibits a tensile breaking strength of 30 kPa or more and a tensile breaking elongation of 200% or more.
(10) The hydrophilic group comprises at least a carboxyl group.
(11) The polymer matrix is contained at 1 to 30 parts by weight in 100 parts by weight of the hydrogel,
a polymer derived from the polyfunctional monomer is contained at a ratio of 0.1 to 5 parts by weight in 100 parts by weight of the copolymer, and
the polyvalent ion-containing compound is contained at 0.5 to 15 parts by weight in 100 parts by weight of the hydrogel.
(12) The hydrogel has a tension permanent set under 100% constant elongation of 10% or less.
(13) The polyvalent ion-containing compound is selected from the group consisting of a metasilicic acid compound, a (meta)silicate mineral, a sulfide mineral, an oxide mineral, a hydroxide mineral, a carbonate mineral, a nitrate mineral, a borate mineral, a sulfate mineral, a chromate mineral, a phosphate mineral, an arsenate mineral, a vanadate mineral, a tungstate mineral, and a molybdate mineral, which contain Al.
(14) The hydrogel further comprises an alkali component dissolved in the water.
(15) A 25% compression strength when the alkali component is contained is 90% or more of a 25% compression strength when the alkali component is not contained.
(16) The monofunctional monomer is selected from (meth)acrylic acid, (meth)acrylamide, sodium (meth)acrylate, potassium (meth)acrylate, zinc (meth)acrylate, dimethyl(meth)acrylamide, vinylsulfonic acid, sodium vinylsulfonate, p-styrenesulfonic acid, sodium p-styrenesulfonate, allylsulfonic acid, sodium allylsulfonate, 2-(meth)acrylamido-2-methylpropanesulfonic acid, 3-((meth)acryloyloxy)-1-propanesulfonic acid, potassium 3-((meth)acryloyloxy)-1-propanesulfonate, 3-((meth)acryloyloxy)-2-methyl-1-propanesulfonic acid, potassium 3-((meth)acryloyloxy)-2-methyl-1-propanesulfonate, N-vinylacetamide, N-vinylformamide, allylamine, 2-vinylpyridine, and 4-vinylpyridine, and the polyfunctional monomer is selected from the group consisting of divinylbenzene, divinylbiphenyl, divinylsulfone, diethylene glycol divinyl ether, pentaerythritol triallyl ether, pentaerythritol tetraallyl ether, dimethyldiallylammonium chloride, N,N'-methylenebis(meth)acrylamide, ethylene glycol di(meth)acrylate, glycerol tri(meth)acrylate, polyethylene glycol di(meth)acrylate, polypropylene glycol di(meth)acrylate, and polyglycerol di(meth)acrylate.

Furthermore, according to the present invention,
when the hydrogel sheet further comprises an alkali component dissolved in water, and
the alkali component is dissolved in water by immersing the hydrogel sheet after polymerization in an aqueous alkali solution,
the hydrogel can be more simply produced.

BEST MODE FOR CARRYING OUT THE INVENTION

(Hydrogel)

The hydrogel comprises water, a gel strength improving agent, and a polymer matrix containing the water and the gel strength improving agent.

(1) Polymer Matrix

A polymer matrix comprises a copolymer of a monofunctional monomer having one ethylenically unsaturated group and a polyfunctional monomer having 2 to 6 ethylenically unsaturated groups.
It is preferable that the polymer matrix is contained at 1 to 30 parts by weight in 100 parts by weight of the hydrogel. When the content is less than 1 part by weight, the strength of the hydrogel is reduced and a sheet shape may not be retained. When the content is more than 30 parts by weight, since a polymerization rate becomes rapid and a molecular weight of the polymer matrix is reduced, the strength may be reduced and the breaking strength may be reduced. Additionally, the reaction heat at the time of polymerization becomes very high and the polymer matrix is depolymerized, and thereby, the breaking strength may be reduced. Additionally, when used as an electrolyte of a battery, the impedance is high and desired battery properties may not be realized. The content can take 1 part by weight, 2 parts by weight, 5 parts by weight, 10 parts by weight, 15 parts by weight, 20 parts by weight, 25 parts by weight, and 30 parts by weight. The more preferable content is 2 to 27 parts by weight, and the further preferable content is 5 to 25 parts by weight.
The copolymer has a hydrophilic group binding to a main chain. Examples of the hydrophilic group include a carboxyl group, a hydroxy group, an amino group, a sulfo group, and the like. It is preferable that the copolymer contains at least a carboxyl group. It is not suitable that the hydrophilic group is bound to a polymer chain other than a main chain, from a view point of improvement in the mechanical strength. The number of hydrophilic groups is preferably such that the hydrophilic functional group equivalent (molecular weight per one functional group) of the monofunctional monomer constituting the polymer matrix is 300 g/mol or less. This equivalent can take 10 g/mol, 50 g/mol, 100 g/mol, 150 g/mol, 200 g/mol, 250 g/mol, and 300 g/mol. It is preferable that the copolymer has no ester bond and no amide bond in its main chain.

It is preferable that the copolymer is contained at 60 to 100 parts by weight in 100 parts by weight of the polymer matrix. When the content is less than 60 parts by weight, the strength of a hydrogel sheet is reduced and a sheet shape may not be retained. The content can take 60 parts by weight, 70 parts by weight, 80 parts by weight, 90 parts by weight, and 100 parts by weight. It is more preferable that the copolymer is contained at 80 parts by weight or more. It is more preferable that the polymer matrix is composed of only the copolymer.

(a) Monofunctional Monomer

The monofunctional monomer is not particularly limited, as far as it has one ethylenically unsaturated group. The monofunctional monomer is preferably a monomer having solubility in water. Herein, solubility means that 1 g or more is dissolved in 100 g of water. Additionally, it is preferable that the monofunctional monomer has a hydrophilic group (for example, carboxyl group). Examples of the monofunctional monomer include (meth)acrylic acid, (meth)acrylamide, sodium (meth)acrylate, potassium (meth)acrylate, zinc (meth)acrylate, itaconic acid, mesaconic acid, citraconic acid, dimethyl(meth)acrylamide, vinylsulfonic acid, sodium vinylsulfonate, p-styrenesulfonic acid, sodium p-styrenesulfonate, allylsulfonic acid, sodium allylsulfonate, 2-(meth)acrylamido-2-methylpropanesulfonic acid, 3-((meth)acryloyloxy)-1-propanesulfonic acid, potassium 3-((meth)acryloyloxy)- 1-propanesulfonate, 3-((meth)acryloyloxy)-2-methyl-1-propanesulfonic acid, potassium 3-((meth)acryloyloxy)-2-methyl-1-propanesulfonate, N-vinylacetamide, N-vinylformamide, allylamine, 2-vinylpyridine, 4-vinylpyridine, and the like. The monofunctional monomer may be only one kind or may be a mixture of a plurality of kinds.

When used in an alkali battery, a monomer having no functional group which is hydrolyzed with alkali is preferable, and examples of such a monofunctional monomer include acrylic acid, vinylsulfonic acid, sodium vinylsulfonate, sodium p-styrenesulfonate, and the like.

(b) Polyfunctional Monomer

The polyfunctional monomer is not particularly limited, as far as it has 2 to 6 ethylenically unsaturated groups. As the polyfunctional monomer, a monomer having no ester bond and no amide bond between ethylenically unsaturated groups is preferable. Examples of the polyfunctional monomer include divinylbenzene, sodium divinylbenzenesulfonate, divinylbiphenyl, divinylsulfone, diethylene glycol divinyl ether, pentaerythritol triallyl ether, pentaerythritol tetraallyl ether, dimethyldiallylammonium chloride, dimethyldiallylammonium chloride, N,N'-methylenebis(meth)acrylamide, ethylene glycol di(meth)acrylate, glycerol tri(meth)acrylate, polyethylene glycol di(meth)acrylate, polypropylene glycol di(meth)acrylate, polyglycerol di(meth)acrylate, and the like. The polyfunctional monomer may be only one kind or may be a mixture of a plurality of kinds.

(c) Ratio of Polyfunctional Monomer

It is preferable that a polymer derived from the polyfunctional monomer is contained at the ratio of 0.1 to 5 parts by weight based on 100 parts by weight of a copolymer. The content can take 0.1 parts by weight, 0.4 parts by weight, 0.5 parts by weight, 1 part by weight, 1.5 parts by weight, 2 parts by weight, 3 parts by weight, 4 parts by weight, and 5 parts by weight.

The content of the polymer derived from the polyfunctional monomer in the copolymer can be measured by pyrolysis GC. Measurement by pyrolysis GC can be performed, for example, by the following procedure.

(Measurement of Divinylbenzene Content of Polymer derived from Divinylbenzene as Polyfunctional Monomer)

After about 0.05 g of the hydrogel after polymerization is cut into the as small as possible size, the hydrogel is precisely weighed in a centrifugal setting tube, about 10 ml of methanol is added, and the tube is allowed to stand at an ambient temperature for 10 hrs or longer. After the cut hydrogel is ultrasound-washed, extracted for about 15 minutes, and mixed well again, the extract is centrifuged at 3,500 rpm $\times$ 30 min, the supernatant is discarded, the precipitate is taken out, and the precipitate is absolutely dried, thereby, separation of copolymer resin components contained in the hydrogel is performed, and this is used as a measurement sample.

The sample (0.1 to 0.5 mg) is precisely weighed and wrapped so as to be pressed to a ferromagnetic metal having the Curie point of 590°C (Pyrofoil: manufactured by Japan Analytical Industry Co., Ltd.), a divinylbenzene monomer which has been generated by measurement with a pyrolyzer, Curie Point Pyrolyzer JPS-700 Type (manufactured by Japan Analytical Industry Co., Ltd.) under the following condition is measured using Gas Chromatograph GC7820 (manufactured by Agilent Technologies, Inc.) (detector: FID), and the content is calculated from a calibration curve which has been prepared in advance using a peak area of a divinylbenzene monomer obtained by similarly measuring a divinylbenzene homopolymer.

(Measurement Condition)

- Heating (590°C-5 sec)
- Oven temperature (300°C)
- Needle temperature (300°C)
- Column (EC-5 ($\varphi$ 0.25 mm $\times$ 30 m $\times$ film thickness 0.25 $\mu$m) manufactured by GRACE Co., Ltd.)

(Column Temperature Condition)

- Temperature condition (A temperature is retained at 50°C for 0.5 minutes, thereafter, raised to 200°C at 10°C/min, further raised to 320°C at 20°C/min, and retained at 320°C for 0.5 minutes)
- Carrier gas (He)
- He flow rate (39.553 ml/min)
- Inlet pressure (100 kPa)
- Inlet temperature (300°C)
- Detector temperature (300°C)
- Split ratio (1/50)

As a standard sample for preparing a calibration curve, a divinylbenzene homopolymer manufactured by SEKISUI PLASTICS CO., LTD. is used.

As divinylbenzene homopolymer particles, particles which were prepared by the following method were used.

That is, 2,000 parts by weight of deionized water having dissolved 0.2 parts by weight of sodium laurylsulfate was placed into a polymerization vessel equipped with a stirrer and a thermometer, and 200 parts by weight of calcium tertiary phosphate was dispersed therein. A mixed solution having dissolved 10 parts by weight of 2,2'-azobis(2,4-dimethylvaleronitrile) in 1,000 parts by weight of pre-prepared divinylbenzene (product name "DVB-810" manufactured by Nippon Steel & Sumikin Chemical Co., Ltd.) was placed therein, the solution was stirred with a T.K. HOMO MIXER (manufactured by PRIMIX Corporation) at 4,000 rpm for 10 minutes, the polymerization vessel was heated to 65°C to conduct suspension polymerization while stirring, and thereafter, the polymerization mixture was cooled to room temperature. The suspension obtained herein was washed with 10,000 parts by weight of deionized water by suction filtration and dried to obtain divinylbenzene polymer particles. An average particle diameter of divinylbenzene homopolymer particles which had been measured with a particle size distribution measuring device, Multisizer 3 (manufactured by Beckman Coulter, Inc.) was 11.5 $\mu$m.

When the ratio of the polymer derived from the polyfunctional monomer is less than 0.1 parts by weight, the crosslinking density is reduced and a sheet shape may not be retained. When the ratio is more than 5 parts by weight, phase separation of the polymer derived from the polyfunctional monomer may occur and give the hydrogel having an ununiform crosslinking structure. The more preferable ratio is 0.2 to 3 parts by weight and the further preferable ratio is 0.4 to 1.5 parts by weight.

In addition, the copolymer includes components derived from the monofunctional monomer and the polyfunctional monomer, and a use amount of each monomer at the time of production of the copolymer and the content of each component in the copolymer are approximately the same.

(d) Other Monomers

In such a range that the effect of the present invention is not impaired, components derived from other monomers other than the above-mentioned monofunctional monomer and the polyfunctional monomer may be contained in the copolymer in such a form that they copolymerize with the above-mentioned monofunctional monomer and/or the polyfunctional monomer. Examples of the other monomers include N,N'-methylenebis(meth)acrylamide, ethylene glycol di(meth)acrylate, glycerol tri(meth)acrylate, polyethylene glycol di(meth)acrylate, polypropylene glycol di(meth)acrylate, polyglycerol di(meth)acrylate, (meth)acrylamide, dimethyl(meth)acrylamide, vinylsulfonic acid, a sodium or potassium salt of vinylsulfonic acid, p-styrenesulfonic acid, a sodium or potassium salt of p-styrenesulfonic acid, allylsulfonic acid, a sodium or potassium salt of allylsulfonic acid, a sodium or potassium salt of 2-(meth)acrylamido-2-methylpropanesulfonic acid, 3-((meth)acryloyloxy)-1-propanesulfonic acid, sodium or potassium of 3-((meth)acryloyloxy)-1-propanesulfonic acid, 3-((meth)acryloyloxy)-2-methyl-1-propanesulfonic acid, sodium or potassium of 3-((meth)acryloyloxy)-2-methyl-1-propanesulfonic acid, N-vinylacetamide and N-vinylformamide, allylamine, 2-vinylpyridine, 4-vinylpyridine, and the like. The ratio of other monomers occupied in 100 parts by weight of total monomers is preferably 25 parts by weight or less and preferably 5 parts by weight or less. It is more preferable that all monomers are composed of the above-mentioned monofunctional monomer and polyfunctional monomer.

(e) Other Polymers

Additionally, in such a range that the effect of the present invention is not impaired, other polymers other than the copolymer of the above-mentioned monofunctional monomer and polyfunctional monomer may be contained in a polymer matrix in a form that they do not polymerize with the above-mentioned copolymer. Examples of the other polymers include a polyvinyl alcohol-based polymer, a cellulose derivative, and the like. The ratio of other polymers occupied in 100 parts by weight of the polymer matrix is preferably less than 40 parts by weight and more preferably less than 20 parts by weight.

(2) Water

It is preferable that water is contained at 5 to 99 parts by weight in 100 parts by weight of the hydrogel sheet. When the content is less than 5 parts by weight, an amount of an alkali component which can be contained becomes small, and when used as an electrolyte of a battery, the impedance is high and desired battery properties may not be realized. When the content is more than 99 parts by weight, the strength of the hydrogel sheet becomes low and a sheet shape may not be retained. The content can take 5 parts by weight, 10 parts by weight, 20 parts by weight, 30 parts by weight, 50 parts by weight, 70 parts by weight, 95 parts by weight, and 99 parts by weight. The more preferable content is 10 to 95 parts by weight, and the further preferable content is 20 to 90 parts by weight.

An alkali component may be dissolved in water. By being the alkali component dissolved in water, it becomes possible to be usable in a gel electrolyte for a secondary battery or a method of re-alkalizing concrete. Examples of the alkali component include sodium hydroxide, potassium hydroxide, calcium hydroxide, barium hydroxide, lithium hydroxide, rubidium hydroxide, cesium hydroxide, tetramethylammonium hydroxide, tetraethylammonium hydroxide, and the like. A dissolved amount of the alkali component is preferably an amount up to 70 parts by weight based on 100 parts by weight of water. When a dissolved amount is more than 70 parts by weight, since the electrolyte concentration becomes too high, the impedance may become high. A dissolved amount may be 4 to 70 parts by weight in utility of a gel electrolyte or may be 20 to 70 parts by weight in utility of a method of re-alkalization.

It is preferable that the 25% compression strength when the alkali component is contained is 90% or more of the 25% compression strength when the alkali component is not contained. When the 25% compression strength when the alkali component is contained is 90% or more, use of the hydrogel sheet while a sheet shape is maintained for a long term is possible and this is suitable particularly in utility of a gel electrolyte. More preferably, the 25% compression strength when the alkali component is contained is 95 to 100% of the 25% compression strength when the alkali component is not contained.

Additionally, depending on utility, an acid component may be dissolved in water.

(3) Gel Strength Improving Agent

The gel strength improving agent can be selected from a polyhydric alcohol, a polyvalent ion-containing compound, a polyvinyl alcohol-based polymer, and a cellulose nanofiber.

(a) Polyhydric Alcohol

By containing the polyhydric alcohol, water retainability of the hydrogel can be improved.

Examples of the polyhydric alcohol include, in addition to diols such as ethylene glycol, propylene glycol, and butanediol, polyhydric alcohols such as glycerol, pentaerythritol, and sorbitol; polyhydric alcohol condensates such as polyethylene glycol, polypropylene glycol, diglycerol, and polyglycerol; and modified polyhydric alcohols such as polyoxyethylene glycerol. The polyhydric alcohol may be only one kind or may be a mixture of a plurality of kinds.

It is preferable that the content of polyhydric alcohol is 1 to 70 parts by weight based on 100 parts by weight of the hydrogel. When the content is less than 1 part by weight, sufficient water retainability is not obtained and stability of the hydrogel may be reduced. When the content is more than 70 parts by weight, since the content may exceed an amount of the polyhydric alcohol which can be retained by the polymer matrix, the polyhydric alcohol may bleed out to cause physical property variation. The content can take 1 part by weight, 5 parts by weight, 10 parts by weight, 20 parts by weight, 40 parts by weight, 50 parts by weight, and 70 parts by weight. The more preferable content is 2 to 65 parts by weight, the further preferable content is 5 to 65 parts by weight, the particularly preferable content is 5 to 60 parts by weight, and the preferable content, inter alia, is 20 to 60 parts by weight.

Additionally, in order to prepare a good sheet which can stably retain a shape at the time of handling, it is preferable that the polyhydric alcohol is contained at 20 parts by weight or more based on 100 parts by weight of a total amount of the hydrogel precursor. When the polyhydric alcohol is contained at 20 parts by weight or more, since a polymerization reaction sufficiently proceeds and a molecular weight becomes great, the breaking strength becomes high and a good hydrogel sheet is obtained.

(b) Polyvalent Ion-Containing Compound

The inventor thinks that the polyvalent ion-containing compound forms a reversible ionic crosslinked structure with a hydrophilic group of the monofunctional monomer.

Examples of a polyvalent ion in the polyvalent ion-containing compound include ions of metals such as Be, Mg, Ca, Sr, Cr, Mo, Mn, Tc, Fe, Ru, Co, Ni, Cu, Zn, B, Al, Ga, and In. The polyvalent ion is preferably an ion of a metal such as Ca, Mg, Zn, and Al, and more preferably an ion of a metal of Al.

The polyvalent ion-containing compound is a compound containing the above-mentioned polyvalent ion, and examples thereof include a silicic acid compound, an aluminic acid compound, a metasilicic acid compound, a sulfuric acid compound, a nitric acid compound, a phosphoric compound, a hydroxide, a layered double hydroxide, a clay compound, and the like. Among them, the polyvalent ion-containing compound having a bulky structural unit is preferably used. When the polyvalent ion-containing compound having a bulky structural unit is used, particularly, the hydrogel which is high in the tensile breaking strength and the elongation can be obtained. Examples of the polyvalent ion-containing compound having a bulky structural unit include magnesium aluminate metasilicate and hydrotalcite which are used as antacids, and the like.

The above-mentioned polyvalent ion-containing compound may be only one kind or may be a mixture of a plurality of kinds.

It is preferable that the polyvalent ion-containing compound is contained at 0.5 to 15 parts by weight in 100 parts by weight of the hydrogel. When the content is less than 0.5 parts by weight, the hydrogel cannot take a crosslinked structure and may not retain a sheet shape. When the content is more than 15 parts by weight, the polyvalent ion-containing compound is not completely compatible with a gel precursor and the hydrogel may be a hydrogel having an ununiform crosslinked structure. The content can take 0.5 parts by weight, 1 part by weight, 3 parts by weight, 5 parts by weight, 10 parts by weight, 12 parts by weight, and 15 parts by weight. The content is more preferably 1 to 12 parts by weight and further preferably 3 to 10 parts by weight.

(c) Polyvinyl Alcohol-Based Polymer

The polyvinyl alcohol-based polymer is not particularly limited, as far as it can be used as an additive to the hydrogel. Examples of the polyvinyl alcohol-based polymer include a homopolymer of polyvinyl alcohol which is obtained by saponification of polyvinyl acetate, and a copolymer of polyvinyl alcohol which is obtained by saponification of a copolymer of vinyl acetate and another monomer copolymerizable therewith (for example, vinyl formate, vinyl propionate, vinyl benzoate, vinyl t-butylbenzoate, and the like).

It is preferable that the polyvinyl alcohol-based polymer exhibits an average polymerization degree of 500 to 3,000. When an average polymerization degree is less than 500, the effect of improving the mechanical strength may not be obtained. Furthermore, in this case, when immersed in an alkali, the hydrogel ununiformly shrinks and a shape thereof may become distorted. When an average polymerization degree exceeds 3,000, upon dissolution in a monomer blending liquid at the time of preparation of the hydrogel, increase in the viscosity is remarkable and the hydrogel may not be uniformly dissolved. An average polymerization degree can take 500, 1,000, 1,500, 2,000, 2,500, and 3,000. An average polymerization degree is further preferably 800 to 2,500.

It is preferable that the polyvinyl alcohol-based polymer exhibits a saponification degree of 80 to 97 mol%. When a saponification degree is less than 80 mol%, solubility at the time of preparation of a blending liquid is improved, but stability of the resulting hydrogel may be reduced. When a saponification degree exceeds 97 mol%, solubility is extremely reduced and it may become difficult to prepare a blending liquid. A saponification degree can take 80 mol%, 83 mol%, 85 mol%, 90 mol%, 92 mol%, 95 mol%, and 97 mol%. A saponification degree is more preferably 83 to 95 mol% and further preferably 85 to 92 mol%.

It is preferable that the polyvinyl alcohol-based polymer is contained at 10 to 150 parts by weight in 100 parts by weight of the polymer matrix. When the content is less than 10 parts by weight, the effect of improving the mechanical strength may not be obtained. When the content is more than 150 parts by weight, upon dissolution in a monomer blending liquid which is prepared at the time of preparation of the hydrogel, increase in the viscosity is remarkable and a uniform blending liquid may not be prepared. The content can take 10 parts by weight, 15 parts by weight, 20 parts by weight, 50 parts by weight, 75 parts by weight, 100 parts by weight, 120 parts by weight, and 150 parts by weight. The content is more preferably 15 to 120 parts by weight and further preferably 20 to 100 parts by weight.

(d) Cellulose Nanofiber

The cellulose nanofiber is not particularly limited, as far as it can be used as an additive to the hydrogel. Examples of the cellulose nanofiber include a cellulose nanofiber derived from a plant raw material such as a wood fiber (pulp); a cellulose nanofiber in which a part of hydroxy groups has been oxidized; a cellulose nanofiber which has been chemically modified by acylation, etherification such as carboxymethylation, esterification, or other reaction; and the like.

The cellulose nanofiber is obtained, for example, by appropriately subjecting a raw material to chemical treatment such as oxidation and etherification, and thereafter, splitting the chemically-treated raw material by a mechanical method or the like into a fibrous shape.

As the cellulose nanofiber, a cellulose nanofiber exhibiting an average fiber diameter of 1 to 200 nm can be used. When an average fiber diameter is less than 1 nm, rigidity of the cellulose nanofiber is lost and the mechanical strength of the hydrogel may be reduced. When an average fiber diameter is greater than 200 nm, a surface area becomes small and interaction with the polymer matrix may be reduced. A number average fiber diameter is more preferably 1 to 150 nm and further preferably 1 to 100 nm.

As the cellulose nanofiber, a cellulose nanofiber exhibiting a specific surface area of 10 to 1,000 $m^2$/g can be used. When a specific surface area is less than 10 $m^2$/g, an area for interaction between the cellulose nanofiber and the polymer matrix becomes smaller, and the mechanical strength of the hydrogel may be reduced. When a specific surface area is greater than 1,000 $m^2$/g, the strength of the cellulose nanofiber becomes weak and the mechanical strength of the hydrogel may be reduced. A specific surface area is more preferably 30 to 950 $m^2$/g and further preferably 60 to 900 $m^2$/g.

As the cellulose nanofiber, a cellulose nanofiber exhibiting a polymerization degree of 100 to 1,000 can be used. A polymerization degree is more preferably 125 to 950 and further preferably 150 to 900. When a polymerization degree is 100 or more, the sufficient reinforcing effect is obtained.

As the cellulose nanofiber, from easy availability, a cellulose nanofiber which is commercially available as a general industrial cellulose fiber can be used. Specific examples of a commercially available product of the cellulose nanofiber include RHEOCRYSTA series (manufactured by DKS Co., Ltd.), BiNFi-s series (manufactured by SUGINO MACHINE LIMITED), CELISH series (manufactured by Daicel FineChem Ltd.), and the like.

It is preferable that the cellulose nanofiber is contained at 1 to 50 parts by weight in 100 parts by weight of the polymer matrix. When the content is less than 1 part by weight, the effect of improving the mechanical strength may not be obtained. When the content is more than 50 parts by weight, upon dissolution in a monomer blending liquid which is prepared at the time of preparation of the hydrogel, increase in the viscosity is remarkable and a uniform blending liquid may not be prepared. The content can take 1 part by weight, 1.5 parts by weight, 2 parts by weight, 5 parts by weight, 10 parts by weight, 20 parts by weight, 30 parts by weight, 40 parts by weight, and 50 parts by weight. The content is more preferably 1.5 to 40 parts by weight and further preferably 2 to 30 parts by weight.

(4) Other Components

(a) Supporting Material

The hydrogel may contain a supporting material such as a woven fabric, a non-woven fabric, and a porous sheet. By containing the supporting material, a shape of the sheet can be easily maintained. Examples of a material for the supporting material include natural fibers such as cellulose, silk, and hemp; synthetic fibers such as polyester, nylon, rayon, polyethylene, polypropylene, and polyurethane; and mixed-spun fabrics thereof. When an alkali component is made to be contained therein, synthetic fibers such as rayon, polyethylene, and polypropylene having no component which is degraded with the alkali component, and mixed-spun fabrics thereof are preferable. The supporting material may be positioned at any of a surface, a back and a middle part of the hydrogel.

(b) Protective Film

The hydrogel may be provided with a protective film on a surface and/or a back thereof. When the protective film is used as a separator, it is preferable that the protective film is release-treated. When the hydrogel is provided with the protective film on both of a surface and a back, the peeling strength may be adjusted so that it is different between on the surface and on the back. Additionally, when the protective film is used as the supporting material, release-treatment is not necessary.

Examples of the protective film include films composed of polyester, polyolefin, polystyrene, polyurethane, paper, a paper which is obtained by laminating resin films (for example, polyethylene film, polypropylene film), and the like. Examples of release-treatment include baking-type silicone coating in which a crosslinking and curing reaction is performed with heat or ultraviolet rays.

(c) Additive

The hydrogel may contain an additive, as necessary. Examples of the additive include an electrolyte, an antiseptic, a bactericide, an anti-mold agent, an anti-rust agent, an antioxidant, an anti-foaming agent, a stabilizer, a perfume, a surfactant, a coloring agent, and a medicinal ingredient (for example, anti-inflammatory, vitamin agent, whitening agent, and the like).

For example, by containing an electrolyte, an electrically conductive hydrogel is obtained. The electrically conductive hydrogel can be used, for example, as a bioelectrode such as an electrode for measuring an electrocardiogram, an electrode for a low frequency treatment instrument, and various earth electrodes.

Additionally, by adding a pressure-sensitive adhesive such as an acrylic-based emulsion and a phosphoric ester-type surfactant, tackiness can be imparted to the hydrogel. A tacky hydrogel can be used, for example, as a sheet of a backfill for an electrolytic corrosion protection step, a member for re-alkalization, and a member for desalting.

(5) Physical Properties of Hydrogel Sheet

It is preferable that the hydrogel sheet has the breaking strength of 5 kPa or more. By having the breaking strength of 5 kPa or more, handleability can be improved. The breaking strength can take 5 kPa, 10 kPa, 25 kPa, 50 kPa, 75 kPa, and 100 kPa. The more preferable breaking strength is 5 to 50 kPa.

Additionally, it is preferable that the hydrogel sheet has the breaking elongation of 200% or more. By having the breaking strength of 200% or more, handleability can be improved. The breaking elongation can take 200%, 400%, 600%, 800%, and 1,000%. The more preferable breaking elongation is 200 to 800%.

When water is contained in 100 parts by weight of the hydrogel so that the total content of the polymer matrix and the polyvalent ion-containing compound becomes 20 parts by weight, the hydrogel has the tensile breaking strength of 30 kPa or more. By having the breaking strength of 30 kPa or more, handleability can be improved. The breaking strength can take 30 kPa, 50 kPa, 100 kPa, 150 kPa, 300 kPa, and 500 kPa. The preferable breaking strength is 30 to 300 kPa.

Additionally, when water is contained in 100 parts by weight of the hydrogel so that the total content of the polymer matrix and the polyvalent ion-containing compound becomes 20 parts by weight, the hydrogel has the tensile breaking elongation of 200% or more. By having the breaking elongation of 200% or more, handleability can be improved. The breaking elongation can take 200%, 400%, 600%, 800%, 1,000%, and 1,500%. The preferable breaking elongation is 200 to 1,200%.

Furthermore, it is preferable that the hydrogel exhibits the tension permanent set under 100% constant elongation of 10% or less. When this set is greater than 10%, a shape is changed at the time of handling, variation in the thickness in a gel is generated, and the tensile breaking strength and the breaking elongation may be reduced. This set is more preferably 8% or less and further preferably 5% or less. A lower limit is 0%.

It is preferable that the hydrogel exhibits a swelling degree of 600% or less in a 4M aqueous potassium hydroxide solution and exhibits (swelling degree in 4M aqueous potassium hydroxide solution)/(swelling degree in ion-exchanged water) of 0.2 or less. When a swelling degree is greater than 600%, since the mechanical strength of the hydrogel after swelling is low, the hydrogel may be destructed at the time of handling. A swelling degree can take 10%, 100%, 200%, 300%, 400%, 500%, and 600%. A swelling degree is more preferably 100 to 600% and further preferably 100 to 500%. When (swelling degree in 4M aqueous potassium hydroxide solution)/(swelling degree in ion-exchanged water) is greater than 0.2, the swelling suppressing effect under the alkali environment is low, and reduction in the mechanical strength after alkali swelling may be increased. As a result, the hydrogel may be destructed at the time of handling, and a drying step or the like may need time. (Swelling degree in 4M aqueous potassium hydroxide solution)/(swelling degree in ion-exchanged water) can take 0.01, 0.02, 0.05, 0.1, 0.15, and 0.2, and is more preferably 0.01 to 0.2 and further preferably 0.02 to 0.1.

Additionally, when water is contained in 100 parts by weight of the hydrogel so that the total content of the polymer matrix and the gel strength improving agent becomes 10 parts by weight, the hydrogel has the tensile breaking strength of 10 kPa or more. By having the breaking strength of 10 kPa or more, handleability can be improved. The breaking strength can take 10 kPa, 30 kPa, 100 kPa, 150 kPa, and 300 kPa. The preferable breaking strength is 30 kPa or more, and the more preferable breaking strength is 30 to 150 kPa.

Furthermore, when water is contained in 100 parts by weight of the hydrogel so that the total content of the polymer matrix and the gel strength improving agent becomes 10 parts by weight, the hydrogel has the tensile breaking elongation of 100% or more. By having the breaking elongation of 100% or more, handleability can be improved. The breaking elongation can take 100%, 200%, 400%, 600%, 800%, 1,000%, and 1,200%. The preferable breaking elongation is 100 to 1,000%.

(Method for Producing Hydrogel Sheet)

A hydrogel sheet can be produced, for example, by passing through the steps of:

(i) molding a hydrogel precursor containing water, a gel strength improving agent, a monofunctional monomer having one ethylenically unsaturated group, a polyfunctional monomer having 2 to 6 ethylenically unsaturated groups, and a polymerization initiator into a sheet shape (molding step); and
(ii) obtaining the hydrogel sheet by polymerizing the monofunctional monomer and the polyfunctional monomer (polymerizing step).

(1) Molding Step

As the polymerization initiator in this step, any of a thermopolymerization initiator and a photopolymerization initiator can be used. Among them, the photopolymerization initiator in which change in components before and after polymerization is little is preferably used. Examples of the photopolymerization initiator include, 2-hydroxy-2-methyl-1-phenyl-propane-1-one (product name: Irgacure 1173, manufactured by BASF Japan), 1-hydroxy-cyclohexyl-phenyl-ketone (product name: Irgacure 184, manufactured by BASF Japan), 1-[4-(2-hydroxyethoxy)-phenyl]-2-hydroxy-2-methyl-propane-1-one (product name: Irgacure 2959, manufactured by BASF Japan), 2-methyl-1-[(methylthio)phenyl]-2-morpholinopropane-1-one (product name: Irgacure 907, manufactured by BASF Japan), 2-benzyl-2-dimethylamino-1-(4-morpholino)-butane-1-one (product name: Irgacure 369, manufactured by BASF Japan), and the like. The polymerization initiator may be only one kind or may be a mixture of a plurality of kinds.

It is preferable that a use amount of the polymerization initiator is 0.1 to 5 parts by weight based on 100 parts by weight of a total of all monomers (monofunctional monomer, polyfunctional monomer, and optionally another monomer). When a use amount is less than 0.1 parts by weight, a polymerization reaction does not sufficiently proceed, and an unpolymerized monomer may remain in the resulting hydrogel sheet. When a use amount is more than 5 parts by weight, the sheet may take on an odor due to the residue of the polymerization initiator after the polymerization reaction, or physical properties may be deteriorated by influence of the residue. A more preferable use amount is 0.2 to 3 parts by weight, and a further preferable use amount is 0.4 to 1.5 parts by weight.

When a sheet-like hydrogel is produced, examples of molding of a hydrogel precursor into a sheet shape include: (i) a method of injecting the hydrogel precursor into a mold form; (ii) a method of pouring the hydrogel precursor between protective films and retaining the precursor at the constant thickness; (iii) a method of coating the hydrogel precursor on a protective film; and the like. The method (i) has an advantage that the hydrogel sheet having any shape can be obtained. The methods (ii) and (iii) have an advantage that the relatively thin hydrogel can be obtained. It is suitable to produce the hydrogel containing a supporting material by the method (i).

In addition, the hydrogel precursor may contain the above-mentioned other monomers, an additive, and the like.

(2) Polymerizing Step

The hydrogel can be obtained by polymerizing the hydrogel precursor by heat supply or light irradiation. The conditions for heat supply and light irradiation are not particularly limited, as far as the hydrogel can be obtained, and the general condition can be adopted.

In addition, in Example 1 below, by using acrylic acid as the monofunctional monomer and divinylbenzene as the polyfunctional monomer, the hydrogel was obtained. Herein, in Japanese Unexamined Patent Application, First Publication No. 2003-178797, it is stated that two kinds of these monomers can be polymerized by mass polymerization without using a solvent, but in this case, temperature control at the time of polymerization cannot be conducted, and both monomers cannot be homogeneously polymerized at the practical level. According to the inventors of the present application, that is however not true, and it has been found out that, unexpectedly, polymerization is possible in a liquid system, by functioning of a polyhydric alcohol which was added as a moisturizing agent, as a compatibilizing agent.

(3) Other Step

Examples of other step include a step of containing an alkali component. In the step of containing an alkali component, by immersing the hydrogel after polymerization in an aqueous alkali solution, the alkali component in the aqueous alkali solution is dissolved in water in the hydrogel. This immersion is performed under the condition for obtaining the hydrogel having a desired alkali component amount. For example, the immersion can be performed under cooling at 4 to 80°C, an ambient temperature (about 25°C), and warming, as an immersion temperature. An immersion time can be 6 to 336 hours under an ambient temperature.

In addition, in the following Examples (for example, Example 8b), using acrylic acid as the monofunctional monomer, N,N'-methylenebisacrylamide as the polyfunctional monomer, and partially saponified polyvinyl alcohol JP-15 as the polyvinyl alcohol-based polymer, the hydrogel is obtained. In Comparative Example 2b, the hydrogel is obtained without using the polyvinyl alcohol-based polymer, and in this case, appearance that a crosslinked structure is degraded, and the hydrogel is liquefied by immersion in an aqueous potassium hydroxide solution for 24 hours was confirmed. According to the inventors of the present application, it has, however, been found out that, by adding the polyvinyl alcohol-based polymer, liquefaction as in Comparative Example 2b is not observed and a shape can be maintained.

Adjustment of the water content may be performed by drying the hydrogel after immersion. Examples of the adjustment include making the weights of the hydrogel before and after immersion approximately the same.

Additionally, when the hydrogel is used in a sheet of a backfill for an electrolytic corrosion protection step, a member for re-alkalization or a member for desalting, it is preferable that the hydrogel has tackiness. In order to impart tackiness, an adhesive such as an acrylic-based emulsion and a phosphoric acid ester-type surfactant may be added at the (1) molding step.

(Utility of Hydrogel)

The hydrogel can be used in utility requiring the strength and alkali resistance, such as an alkaline secondary battery, a backfill for an electrolytic corrosion protection step, a member for re-alkalization, and a member for desalting. Additionally, when electrical conductivity is imparted to the hydrogel, it can be used as a bioelectrode.

(1) Alkaline Secondary Battery

An alkaline secondary battery herein is a secondary battery in which the hydrogel can be used as an electrolyte layer between a positive electrode and a negative electrode. Examples of such a secondary battery include a nickel-hydrogen secondary battery and a nickel-zinc secondary battery. Since these secondary batteries use an aqueous alkali solution as an electrolytic solution, liquid leakage from the secondary battery can be prevented by the hydrogel.

A configuration of the alkaline secondary battery is not particularly limited, except that the hydrogel is used as an electrolyte layer, but any of general configurations can be used. For example, as a positive electrode of a nickel-hydrogen secondary battery, nickel or a nickel alloy can be used, as a negative electrode, a platinum catalyst can be used, and as a positive electrode of a nickel-zinc secondary battery, nickel or a nickel alloy can be used, and as a negative electrode, zinc or zinc oxide can be used. The positive electrode and the negative electrode may be formed on a current collector composed of nickel, aluminum or the like.

The hydrogel may also have a role of a separator. In this case, it is preferable that the hydrogel is provided with a supporting material.

(2) Backfill for Electrolytic Corrosion Protection Step

The backfill herein means a member which suppresses generation of deterioration such as cracking in a concrete structure due to corrosion of a steel material, in a concrete structure containing a steel material. In this utility, it is preferable that electrical conductivity has been imparted to the hydrogel in order to flow a corrosion protection current through the steel material. Additionally, it is preferable that tackiness has been imparted to the hydrogel in order to make it easy to electrically contact the hydrogel with the steel material and an electrode through which a corrosion protection current is flown.

(3) Member for Re-Alkalization and Member for Desalting

Re-alkalization and desalting are required in a concrete structure. Since the previous re-alkalization and desalting have been performed by coating a composition for them on-site, it is desired that the working efficiency is enhanced. When the hydrogel of the present invention is used, since what is needed is only sticking of a sheet on-site, the working efficiency can be enhanced more considerably than ever before. It is preferable that tackiness has been imparted to the hydrogel for a member for re-alkalization and a member for desalting.

EXAMPLES

The present invention will be further specifically illustrated below by way of Examples, but the present invention is not limited by them at all. Further, methods for measuring various physical properties to be measured in Examples will be described.

(Average Polymerization Degree and Saponification Degree of Polyvinyl Alcohol-Based Polymer (Sample))

An average polymerization degree and a saponification degree are measured in accordance with JIS K 6726-1994.

(1) Average Polymerization Degree

An unsaponified part (remaining acetic acid group) of a sample is completely saponified in advance using sodium hydroxide and purified, and thereafter, an average polymerization degree ($P_A$) is obtained from the following computational equation from the limiting viscosity $[\eta]$ (dL/g) which has been measured in water at 30°C.

$$P_A = ([\eta] \times 10,000/8.29)^{1.613}$$

(2) Saponification Degree

A sample is dissolved in an aqueous phenolphthalein solution and a sample is completely saponified using a certain amount of sodium hydroxide having a specified concentration. A use amount of sulfuric acid or hydrochloric acid when a sample is dissolved by titrating this using sulfuric acid or hydrochloric acid having the same concentration is obtained. Similarly, a phenolphthalein solution having not dissolved a sample is prepared, the same titration work is performed, and thereby, a use amount of sulfuric acid or hydrochloric acid when a sample has not been dissolved is obtained. Using them, an acetic acid amount $X_1$ (%) corresponding to a remaining acetic acid group in the sample is obtained by the following equation.

$$X_1 = ((b\text{-}a) \times f \times D \times 0.06005 \times 100)/(S \times P/100)$$

a: Use amount of sulfuric acid or hydrochloric acid (ml)
b: Use amount of sulfuric acid or hydrochloric acid in blank test not using sample (ml)
f: Factor of sulfuric acid or hydrochloric acid
D: Concentration of specified liquid
0.06005: Molecular weight of acetic acid/1,000
S: Sample collection amount (g)
P: Purity of sample (%)

Using $X_1$, a remaining acetic acid group $X_2$ (mol%) and a saponification degree H (mol%) are obtained by the following equations.

$$X_2 = (44.05 \times X_1)/(60.05\text{-}0.42 \times X_1)$$

H = 100-$X_2$
44.05: Molecular weight of vinyl alcohol
60.05: Molecular weight of acetic acid
0.42: Numerical value obtained from the following relational equation, which holds between $X_1$ and $X_2$

$$X_1 = (X_2 \times 60.05) \times 100/(X_2 \times 86.09 + (100\text{-}X_2) \times 44.05)$$

Molecular weight of vinyl acetate: 86.09

(Average Fiber Diameter of Cellulose Nanofiber)

An average fiber diameter of the cellulose nanofiber can be measured, for example, as follows. An aqueous dispersion of the cellulose nanofiber having the solid content concentration of 0.005 to 0.2% by weight is prepared, the dispersion is dropped on the mesh with a hydrophilic-treated collodion membrane applied thereto and dried to obtain an observation sample, and a fiber diameter in the observation sample is measured using a transmission electron microscope ("H-7600" transmission electron microscope manufactured by Hitachi High-Technologies Corporation, "ER-B" CCD camera system manufactured by AMT Incorporated). In a microscopic image from which the cellulose fiber can be confirmed, 5 or more of cellulose fibers are extracted, a fiber diameter of them is measured, and an average fiber diameter is calculated. Depending on the size of constituting fibers, observation is performed at any of magnification 5,000, 10,000 or 50,000. By data of the thus obtained fiber diameter, an average fiber diameter is calculated.

(Specific Surface Area of Cellulose Nanofiber)

A specific surface area of the cellulose nanofiber was measured according to the BET method (nitrogen adsorption method) described in JIS R1626. An aqueous dispersion of the cellulose nanofiber is dried with a vacuum drier at 80°C to obtain a dried powder. A BET nitrogen adsorption isotherm is measured using an automatic specific surface area/pore distribution device (Tristar 3000 manufactured by Shimadzu Corporation), and a specific surface area is calculated from a nitrogen adsorption amount using the BET multipoint method. In addition, the cellulose density was assumed to be 1.50 g/cm$^3$.

(Polymerization Degree of Cellulose Nanofiber)

0.15 g of a cellulose nanofiber which has been obtained by freeze-drying an aqueous dispersion of the cellulose nanofiber is dissolved in 30 mL of a 0.5M copper-ethylenediamine solution. The viscosity is measured using Cannon-Fenske Viscometer, the limiting viscosity counting is obtained from the Schulz-Blaschke's formula, and a polymerization degree is calculated from the Mark-Houwink-Sakurada's formula.

$$\text{Limiting viscosity } [\eta] = (\eta/\eta 0)/\{c(1 + A \times \eta/\eta 0)\} \text{ (c is cellulose nanofiber}$$

$$\text{concentration (g/dL)}, A=0.28)$$

$$\text{Limiting viscosity } [\eta] = K \times DP^a \text{ (K=5.7} \times 10^{-3}, a = 1)$$

η: Viscosity of cellulose nanofiber copper-ethylenediamine solution
η0: Viscosity of 0.5M copper-ethylenediamine solution
Polymerization degree DP: Cellulose nanofiber

(Absorption Amount of Aqueous Alkali Solution)

First, the hydrogel sheet before alkali immersion is weighed. Thereafter, the hydrogel sheet is placed in a 250 mesh tea bag made of polyethylene, the tea bag is immersed in an aqueous alkali solution for 24 hours, the tea bag is pulled up, water is removed for 10 minutes, and this is weighed. An absorption amount is obtained as follows.

Concerning an absorption amount, the weight of the tea bag not containing the hydrogel sheet which has been immersed in an aqueous alkali solution for 24 hours is used as a blank, a value which is obtained by subtracting the blank and the weight of the hydrogel sheet before immersion from the weight of the tea bag containing the hydrogel sheet which has been swollen by alkali immersion is divided by the weight of the hydrogel sheet before immersion, and multiplied by 100 to obtain a value, which is adopted as an absorption amount. Additionally, in the case where the hydrogel sheet becomes soft at the time of water removal and passes through the mesh, this is described to be "liquefied".

(Breaking Strength and Breaking Elongation in Tensile Test)

(Method a: Examples 1a to 10a and Comparative Examples 1a to 3a)

The hydrogel sheet before alkali immersion is cut into 20 mm $\times$ 50 mm $\times$ 4 mm thickness, and this is used as a test piece. As a tensile testing machine, Texture Analyzer TA.XT Plus (manufactured by EKO Instruments) is used. A 20 mm $\times$ 20 mm $\times$ 4 mm part is placed between upper and lower jigs, and fixed so that the thickness becomes 2 mm. The hydrogel sheet is stretched at a tensile speed of 0.5 mm/sec until it is broken.
The breaking strength and the breaking elongation are obtained as follows.

$$\text{Breaking strength} \quad \sigma_u = P_u/A_0 \ (kPa) \times 1{,}000$$

$P_u$: Load at breakage (N)
$A_0$: Cross-sectional area of sheet (= 20 mm $\times$ 4 mm = 80 mm$^2$)

$$\text{Breaking elongation} \quad \varphi = 100 \times (L_f\text{-}L_o)/L_o \ (\%)$$

$L_f$: Distance between gauge marks at breakage (mm)
$L_o$: Distance between gauge marks before test (=10 mm)

(Method b: Examples 1b to 17b and Comparative Examples 1b to 4b)

When the total content of the polymer matrix and the gel strength improving agent in the total amount of 100 parts by weight of the resulting hydrogel sheet is less than 10 parts by weight, by drying the hydrogel sheet to reduce the content of water, the total content of the polymer matrix and the gel strength improving agent is adjusted so as to become 10 parts by weight. Additionally, when the total content of the polymer matrix and the gel strength improving agent in the total amount of 100 parts by weight of the hydrogel sheet is more than 10 parts by weight, ion-exchanged water is added so that the total content of the polymer matrix and the gel strength improving agent becomes 10 parts by weight, and the hydrogel sheet is allowed to stand for 72 hours to completely immerse the hydrogel sheet therein.
In addition, the total content of the polymer matrix and the gel strength improving agent can be calculated from a blending composition at the time of preparation of the hydrogel. Additionally, the total content can also be calculated by an infrared moisture meter or Thermogravimeter-Differential Thermal Analyzer (TG-DTA).
The above-mentioned hydrogel sheet in which the total content of the polymer matrix and the gel strength improving agent has been adjusted is cut into 20 mm $\times$ 50 mm $\times$ 4 mm thickness, and is adopted as a test piece. As a tensile testing machine, Texture Analyzer TA.XT Plus (manufactured by EKO Instruments) is used. A 20 mm $\times$ 20 mm $\times$ 4 mm part is placed between upper and lower jigs, and fixed so that the thickness becomes 1.5 mm. The hydrogel sheet is stretched at a tensile speed of 0.5 mm/sec until it is broken.
The breaking strength and the breaking elongation are obtained as follows.

$$\text{Breaking strength} \quad \sigma_u = P_u/A_0 \ (kPa) \times 1{,}000$$

$P_u$: Load at breakage (N)
$A_0$: Cross-sectional area of sheet (= 20 mm $\times$ 4 mm = 80 mm$^2$)

$$\text{Breaking elongation} \quad \varphi = 100 \times (L_f\text{-}L_o)/L_o \ (\%)$$

$L_f$: Distance between gauge marks at breakage (mm)
$L_o$: Distance between gauge marks before test (=10 mm)

(Method c: Examples 1c to 6c and Comparative Examples 1c to 4c)

When the total content of the polymer matrix and the polyvalent ion-containing compound in 100 parts by weight of the hydrogel sheet is less than 20 parts by weight, by drying the hydrogel sheet to reduce the content of water, the total content of the polymer matrix and the polyvalent ion-containing compound is adjusted so as to become 20 parts by weight. Additionally, when the total content of the polymer matrix and the polyvalent ion-containing compound in the total amount of 100 parts by weight of the hydrogel sheet is more than 20 parts by weight, ion-exchanged water is added so that the total content of the polymer matrix and the polyvalent ion-containing compound becomes 20 parts by weight, and the hydrogel sheet is allowed to stand for 72 hours to completely immerse the hydrogel sheet therein.

In addition, the total content of the polymer matrix and the gel strength improving agent can be calculated from a blending composition at the time of preparation of the hydrogel. Additionally, the total content can also be calculated by an infrared moisture meter or Thermogravimeter-Differential Thermal Analyzer (TG-DTA).

The above-mentioned hydrogel sheet in which the total content of the polymer matrix and the polyvalent ion-containing compound has been adjusted is cut into 20 mm $\times$ 50 mm $\times$ 2 mm thickness, and is adopted as a test piece. As a tensile testing machine, Texture Analyzer TA.XT Plus (manufactured by EKO Instruments) is used. A 20 mm $\times$ 20 mm $\times$ 2 mm part is placed between upper and lower jigs, and fixed so that the thickness becomes 1 mm. The hydrogel sheet is stretched at a tensile speed of 0.5 mm/sec until it is broken.

The breaking strength and the breaking elongation are obtained as follows.

$$\text{Breaking strength} \quad \sigma_u = P_u/A_0 \ (\text{kPa}) \times 1{,}000$$

$P_u$: Load at breakage (N)
$A_0$: Cross-sectional area of sheet (= 20 mm $\times$ 2 mm = 40 mm$^2$)

$$\text{Breaking elongation} \quad \varphi = 100 \times (L_f\text{-}L_o)/L_o \ (\%)$$

$L_f$: Distance between gauge marks at breakage (mm)
$L_o$: Distance between gauge marks before test (=10 mm)

(25% Compression Strength)

The hydrogel sheet before alkali immersion is cut into 20 mm $\times$ 20 mm $\times$ 4 mm thickness, and is used as a test piece when an alkali component is not contained. Additionally, similarly, the hydrogel sheet before alkali immersion is cut into 20 mm $\times$ 20 mm $\times$ 4 mm thickness, and immersed in a 4M aqueous potassium hydroxide solution at room temperature for 24 hours. After immersion, by drying the test piece to the weight before immersion, this is used as a test piece when an alkali component is contained. Like the tensile test, Texture Analyzer TA.XT Plus (manufactured by EKO Instruments) was used. Using a 30 $\varphi$ cylindrical measurement jig made of stainless, the test piece is compressed at 0.5 mm/sec, and the stress at the time of 1 mm compression is defined as 25% compression strength.

(Swelling Degree)

(1) Swelling Degree in Ion-Exchanged Water

The hydrogel sheet before alkali immersion is cut into 5 mm $\times$ 5 mm $\times$ 4 mm thickness and weighed. Thereafter, the hydrogel sheet is placed into a 250 mesh tea bag made of polyethylene, the tea bag is immersed in a 4M aqueous potassium hydroxide solution for 1 hour, and a copolymer contained in the hydrogel sheet is completely neutralized. Thereafter, the tea bag is pulled up and immersed in 5L of ion-exchanged water for 24 hours, and water is removed. After this step of replacement with ion-exchanged water is performed three times in total, water is removed for 10 minutes, and this is weighed, to obtain the tea bag containing the hydrogel sheet which has been swelled in ion-exchanged water. Additionally, in the case where at water removal, the hydrogel sheet becomes soft and passes through the mesh, this is described to be "liquefied".

A swelling degree is obtained as follows. Concerning a swelling degree, the weight of the tea bag not containing the hydrogel sheet which has been immersed in ion-exchanged water for 72 hours is used as a blank, and a value obtained by subtracting the weight of the brank from the weight of the tea bag containing the hydrogel sheet which has been swollen in ion-exchanged water is divided by the weight of the hydrogel sheet before swelling, and is multiplied by 100 to obtain a value, which is defined as swelling degree (%).

(2) Swelling Degree in 4M Aqueous Potassium Hydroxide Solution

The hydrogel sheet before alkali immersion is cut into 5 mm $\times$ 5 mm $\times$ 4 mm thickness and weighed. Thereafter, the hydrogel sheet is placed into a 250 mesh tea bag made of polyethylene, the tea bag is immersed in a 4M aqueous potassium hydroxide solution for 1 hour, and a copolymer contained in the hydrogel sheet is completely neutralized. Thereafter, the tea bag is pulled up and immersed in 1 L of a 4M aqueous potassium hydroxide solution for 72 hours, water is removed for 10 minutes, this is weighed, and the tea bag containing the hydrogel sheet which has been swollen in a 4M aqueous potassium hydroxide solution is obtained. Additionally, in the case where at the time of water removal, the hydrogel sheet becomes soft and passes through the mesh, this is described to be "liquefied".

A swelling degree is obtained as in (1). Concerning a swelling degree, the weight of the tea bag not containing the hydrogel sheet which has been immersed in a 4M aqueous potassium hydroxide solution for 72 hours is adopted as a blank, and a value obtained by subtracting the weight of the blank from the weight of the tea bag containing the hydrogel sheet which has been swollen in a 4M aqueous potassium hydroxide solution is divided by the weight of the hydrogel sheet before swelling, and is multiplied by 100 to obtain a value, which is defined as swelling degree (%).

(Tension Permanent Set under 100% Constant Elongation)

The tension permanent set under 100% constant elongation is measured in accordance with JIS K6273 2006.

The hydrogel sheets obtained in Examples and Comparative Examples are cut into 6 mm $\times$ 50 mm $\times$ 2 mm thickness and adopted as a test piece. As a tensile testing machine, Texture Analyzer TA.XT Plus (manufactured by EKO Instruments) is used. A 6 mm $\times$ 20 mm $\times$ 2 mm part is placed between upper and lower jigs, and fixed so that the thickness becomes 1 mm. The hydrogel sheet is stretched by a distance between gauge marks (10 mm) at a tensile speed of 5 mm/sec and retained for 10 minutes. After 10 minutes, the test piece is made to shrink at 10 mm/sec, the test piece is taken out from upper and lower jigs, the test piece is allowed to stand on a flat non-tacky stand made of wood for 30 minutes, and a distance between gauge marks after shrinking is measured. Additionally, in the case where the hydrogel sheet has been destructed at the time of 100% elongation, this is described to be "unmeasurable".

The tension permanent set under 100% constant elongation $TS_E$ is obtained as follows.

$$TS_E = 100 \times (L_2\text{-}L_0)/(L_1\text{-}L_0) \ (\%)$$

$L_0$: Distance between gauge marks before elongation (=10 mm)
$L_1$: Distance between gauge marks after elongation (=20 mm)
$L_2$: Distance between gauge marks after shrinking

(Example 1a)

20 parts by weight of acrylic acid (manufactured by Nippon Shokubai Co., Ltd.), 0.20 parts by weight of divinylbenzene (manufactured by Nippon Steel & Sumikin Chemical Co., Ltd.), 60 parts by weight of glycerol (manufactured by NDF CORPORATION), 19.80 parts by weight of ion-exchanged water, and 0.20 parts by weight of Irgacure 1173 (manufactured by BASF Japan) as a polymerization initiator were placed and mixed, to prepare a hydrogel precursor. Then, a silicone frame having the thickness of 4 mm was placed on a peelable PET film, and the hydrogel precursor was poured into the frame. Thereafter, by placing the peelable PET film on the hydrogel precursor, a sheet-like hydrogel precursor was obtained. Thereafter, a step of irradiating ultraviolet rays having the energy of 7,000 mJ/cm² with a small UV polymerizing machine (J-cure1500, metal halide lamp type name MJ-1500L, manufactured by JATEC Co., Ltd.) under the condition of a conveyer speed of 0.4 m/min and a distance between works of 150 mm, was performed three times to perform polymerization, and thereby, a hydrogel sheet having the thickness of 4 mm was prepared.

When the hydrogel sheet after polymerization was immersed in a 4M aqueous potassium hydroxide solution at room temperature for 24 hours, a hydrogel sheet containing an aqueous alkali solution, which had absorbed 442 parts by weight of a 4M aqueous potassium hydroxide solution based on 100 parts by weight of the hydrogel sheet before immersion was obtained.

(Example 2a)

According to the same manner as that of Example 1a except that a use amount of divinylbenzene was 0.04 parts by weight and a use amount of ion-exchanged water was 19.96 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 502 parts by weight of a 4M aqueous potassium hydroxide solution based on 100 parts by weight of the hydrogel sheet before immersion was obtained.

(Example 3a)

According to the same manner as that of Example 1a except that 0.20 parts by weight of divinylbenzene was changed to 0.14 parts by weight of divinylsulfone, a use amount of glycerol was 30 parts by weight, and a use amount of ion-exchanged water was 49.86 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 485 parts by weight of a 4M aqueous potassium hydroxide solution based on 100 parts by weight of the hydrogel sheet before immersion was obtained.

(Example 4a)

According to the same manner as that of Example 1a except that a use amount of divinylbenzene was 0.30 parts by weight and a use amount of ion-exchanged water was 19.70 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 375 parts by weight of a 4M aqueous potassium hydroxide solution based on 100 parts by weight of the hydrogel sheet before immersion was obtained.

(Example 5a)

According to the same manner as that of Example 1a except that a use amount of divinylbenzene was 0.16 parts by weight, a use amount of glycerol was 45 parts by weight, and a use amount of ion-exchanged water was 34.84 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 379 parts by weight of a 4M aqueous potassium hydroxide solution based on 100 parts by weight of the hydrogel sheet before immersion was obtained.

(Example 6a)

According to the same manner as that of Example 1a except that, as the monofunctional monomer, 20 parts by weight of vinylsulfonic acid (manufactured by Asahi Kasei Finechem Co., Ltd.) was used, a use amount of glycerol was 50 parts by weight, and a use amount of ion-exchanged water was 29.80 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 458 parts by weight of a 4M aqueous potassium hydroxide solution based on 100 parts by weight of the hydrogel sheet before immersion was obtained.

(Example 7a)

According to the same manner as that of Example 1a except that, as the monofunctional monomer, 12 parts by weight of acrylic acid and 8 parts by weight of sodium p-styrenesulfonate (manufactured by Wako Pure Chemical Industries, Ltd.) were used, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 299 parts by weight of a 4M aqueous potassium hydroxide solution based on 100 parts by weight of the hydrogel sheet before immersion was obtained.

(Example 8a)

According to the same manner as that of Example 1a except that a use amount of acrylic acid was 25 parts by weight, a use amount of divinylbenzene was 0.25 parts by weight, a use amount of glycerol was 30 parts by weight, and a use amount of ion-exchanged water was 44.75 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 470 parts by weight of a 4M aqueous potassium hydroxide solution based on 100 parts by weight of the hydrogel sheet before immersion was obtained.

(Example 9a)

According to the same manner as that of Example 1a except that 60 parts by weight of glycerol was changed to 60 parts by weight of polyethylene glycol: PEG200 (manufactured by DSK Co., Ltd.), a use amount of divinylbenzene was 0.30 parts by weight, and a use amount of ion-exchanged water was 19.70 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 571 parts by weight of a 4M aqueous potassium hydroxide solution based on 100 parts by weight of the hydrogel sheet before immersion was obtained.

(Example 10a)

According to the same manner as that of Example 1a except that 60 parts by weight of glycerol was changed to 20 parts by weight of D-sorbitol (manufactured by Wako Pure Chemical Industries, Ltd.), a use amount of divinylbenzene was 0.12 parts by weight, and a use amount of ion-exchanged water was 59.88 parts by weight, a hydrogel sheet was obtained. When the hydrogel sheet after polymerization was immersed in a 4M aqueous potassium hydroxide solution at room temperature for 24 hours, the hydrogel sheet containing an aqueous alkali solution, which had absorbed 426 parts by weight of a 4M aqueous potassium hydroxide solution based on 100 parts by weight of the hydrogel sheet before immersion was obtained.

(Comparative Example 1a)

According to the same manner as that of Example 1a except that glycerol was not used and a use amount of ion-exchanged water was 79.80 parts by weight, a sheet-like hydrogel precursor was obtained.
When this hydrogel precursor was irradiated with ultraviolet rays as in Example 1a, a hydrogel sheet was obtained, but when the peelable PET film was peeled, the hydrogel sheet was destructed and physical property evaluation could not be performed.

(Comparative Example 2a)

20 parts by weight of crosslinked polyacrylic acid particles composed of a fine powder having a particle diameter of 20 to 50 $\mu$m (Junron PW-120, manufactured by Toagosei Co., Ltd.) and 600 parts by weight of ion-exchanged water were added and stirred for 72 hours, and thereby, a dilute aqueous crosslinked polyacrylic acid solution was prepared. This aqueous solution was poured into a silicone frame and naturally dried until an amount of ion-exchanged water became 80 parts by weight, and thereby, a hydrogel was obtained. This hydrogel gel was rolled with a pressing machine to the thickness of 4 mm, and thereby, a hydrogel sheet was prepared.
When an alkali immersion step was performed as in Example 1a, the hydrogel sheet containing an aqueous alkali solution, which had absorbed 312 parts by weight of a 4M aqueous potassium hydroxide solution based on 100 parts by weight of the hydrogel sheet before immersion was obtained.

(Comparative Example 3a)

According to the same manner as that of Comparative Example 2a, except that an amount of crosslinked polyacrylic acid particles (Junron PW-120) was changed from 20 parts by weight to 8 parts by weight, and 12 parts by weight of hydrotalcite (manufactured by Wako Pure Chemical Industries, Ltd.) was added, a hydrogel sheet was prepared.
When an alkali immersion step was performed as in Example 1a, the hydrogel sheet containing an aqueous alkali solution, which had absorbed 304 parts by weight of a 4M aqueous potassium hydroxide solution based on 100 parts by weight of the hydrogel sheet before immersion was obtained.
Constituent amounts of raw materials and the results of the above-mentioned Examples and Comparative Examples are shown altogether in Tables 1 and 2.

[Table 1]

| Constituent amount | | | Unit | Example | | | | | | | |
|---|---|---|---|---|---|---|---|---|---|---|---|
| | | | | 1a | 2a | 3a | 4a | 5a | 6a | 7a | 8a |
| | Monofunctional monomer | Acrylic acid | Parts by weight | 20 | 20 | 20 | 20 | 20 | - | 12 | 25 |
| | | Vinylsulfonic acid | | - | - | - | - | - | 20 | - | - |
| | | Sodium p-styrenesulfonate | | - | - | - | - | - | - | 8.0 | - |
| | Polyfunctional monomer | Divinylbenzene | | 0.20 | 0.04 | - | 0.30 | 0.16 | 0.20 | 0.20 | 0.25 |
| | | Divinylsulfone | | - | - | 0.14 | - | - | - | - | - |
| | Polyhydric alcohol | Glycerol | | 60 | 60 | 30 | 60 | 45 | 50 | 60 | 30 |
| | Ion-exchanged water | | | 19.80 | 19.96 | 49.86 | 19.70 | 34.84 | 29.80 | 19.80 | 44.75 |
| | Alkali absorption amount | | | 442 | 502 | 485 | 375 | 379 | 458 | 299 | 470 |
| Evaluation | Tensile test | Breaking strength (kPa) | | 9.85 | 8.55 | 9.04 | 15.94 | 6.77 | 9.36 | 11.54 | 31.21 |
| | | Breaking elongation (%) | | 499 | 529 | 657 | 450 | 480 | 505 | 302 | 742 |
| | 25% compression test | Before alkali immersion (kPa) | | 12.48 | 6.71 | 8.62 | 14.37 | 3.68 | 11.77 | 14.80 | 38.31 |
| | | After alkali immersion (kPa) | | 12.16 | 6.43 | 8.41 | 14.28 | 3.65 | 11.43 | 14.36 | 37.58 |
| | | After immersion/before immersion × 100 (%) | | 97.4 | 95.8 | 97.5 | 99.3 | 99.1 | 97.1 | 97.0 | 98.1 |

[Table 2]

| Constituent amount | | | Unit | Example | | Comparative Example | | |
|---|---|---|---|---|---|---|---|---|
| | | | | 9a | 10a | 1a | 2a | 3a |
| | Monofunctional monomer | Acrylic acid | Parts by weight | 20 | 20 | 20 | - | - |
| | Polyfunctional monomer | Divinylbenzene | | 0.30 | 0.12 | 0.20 | - | - |
| | | N,N'-methylenebisacrylamide | | - | - | - | - | - |
| | Polyhydric alcohol | Glycerol | | - | - | - | | - |
| | | Polyethylene glycol 200 | | 60 | - | - | - | - |
| | | D-sorbitol | | - | 20 | - | - | - |
| | Crosslinked polyacrylic acid particles | Junron PW-120 | | - | - | - | 20 | 8 |
| | Layered double hydroxide | Hydrotalcite | | - | - | - | - | 12 |
| | Ion-exchanged water | | | 19.70 | 59.88 | 79.80 | 80 | 80 |
| | Alkali absorption amount | | | 571 | 426 | - | 312 | 304 |
| Evaluation | Tensile test | Breaking strength (kPa) | | 8.16 | 36.45 | Unmeasurable | 3.46 | 8.84 |
| | | Breaking elongation (%) | | 356 | 572 | | 86 | 43 |
| | 25% compression test | Before alkali immersion (kPa) | | 7.23 | 31.12 | | 3.18 | 25.52 |
| | | After alkali immersion (kPa) | | 7.11 | 30.04 | | 2.97 | 24.81 |
| | | After immersion/before immersion $\times$ 100 (%) | | 98.3 | 96.5 | | 93.4 | 97.2 |

From Tables 1 and 2, it is seen that, in Examples 1a to 10a, when the polymer matrix contains the copolymer of the monofunctional monomer having one ethylenically unsaturated group and the polyfunctional monomer having 2 to 6 ethylenically unsaturated groups, the copolymer has no ester bond and no amide bond in its main chain and has a hydrophilic group binding to the main chain, the polymer matrix is contained at 1 to 30 parts by weight in 100 parts by weight of the above-mentioned hydrogel sheet, and the above-mentioned polyfunctional monomer-derived polymer is contained at the ratio of 0.1 to 5 parts by weight in 100 parts by weight of the above-mentioned copolymer, the hydrogel sheet having the breaking strength of 5 kPa or more and the breaking elongation of 200% or more in a tensile test is obtained.

Additionally, it is seen that in the hydrogel sheets of Examples 1a to 10a, a shape is also retained in alkali immersion and there is almost no reduction in the strength due to alkali immersion.

(Example 1b)

20 parts by weight of acrylic acid (manufactured by Nippon Shokubai Co., Ltd.), 0.12 parts by weight of N,N'-methylenebisacrylamide (manufactured by MRC UNITEC Co., Ltd.), 46.54 parts by weight of glycerol (manufactured by NDF CORPORATION), 5 parts by weight of partially saponified polyvinyl alcohol JP-15 (manufactured by JAPAN VAM & POVAL CO., LTD., saponification degree 88.5 mol%, average polymerization degree 1,500), 28.34 parts by weight of ion-exchanged water, and 0.20 parts by weight of Irgacure 1173 (manufactured by BASF Japan) as a polymerization initiator were placed and mixed to prepare a hydrogel precursor. Then, a silicone frame having the thickness of 4 mm was placed on a peelable PET film and the hydrogel precursor was poured into the frame. Thereafter, the peelable PET film was placed on the hydrogel precursor, thereby, a sheet-like hydrogel precursor was obtained. Thereafter, a step of irradiating ultraviolet rays having the energy of 7,000 mJ/cm$^2$ with a small UV polymerizing machine (J-cure1500, metal halide lamp type name MJ-1500L, manufactured by JATEC Co., Ltd.) under the condition of a conveyor speed of 0.4 m/min and a distance between works of 150 mm was performed three times, and thereby, a hydrogel sheet having the thickness of 4 mm was prepared.

When the hydrogel sheet after polymerization was immersed in a 4M aqueous potassium hydroxide solution at room temperature for 24 hours, the hydrogel sheet containing an alkali component, which had absorbed 391 parts by weight of an aqueous potassium hydroxide solution was obtained.

(Example 2b)

According to the same manner as that of Example 1b except that a use amount of partially saponified polyvinyl alcohol JP-15 was 8 parts by weight, a use amount of glycerol was 26.67 parts by weight, and a use amount of ion-exchanged water was 45.21 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 322 parts by weight of an aqueous potassium hydroxide solution was obtained.

(Example 3b)

According to the same manner as that of Example 2b except that glycerol was not used, and a use amount of ion-exchanged water was 71.88 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 350 parts by weight of an aqueous potassium hydroxide solution was obtained.

(Example 4b)

According to the same manner as that of Example 1b except that the polyfunctional monomer was changed from N,N'-methylenebisacrylamide to 0.30 parts by weight of divinylbenzene (manufactured by Nippon Steel & Sumikin Chemical Co., Ltd.), a use amount of partially saponified polyvinyl alcohol JP-15 was 3 parts by weight, a use amount of glycerol was 60 parts by weight, and a use amount of ion-exchanged water was 16.70 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 360 parts by weight of an aqueous potassium hydroxide solution was obtained.

(Example 5b)

According to the same manner as that of Example 1b except that a use amount of N,N'-methylenebisacrylamide was 0.4 parts by weight, a use amount of partially saponified polyvinyl alcohol JP-15 was 8 parts by weight, a use amount of glycerol was 26.67 parts by weight, and a use amount of ion-exchanged water was 44.93 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 267 parts by weight of an aqueous potassium hydroxide solution was obtained.

(Example 6b)

According to the same manner as that of Example 1b except that, as the monofunctional monomer, 20 parts by weight of vinylsulfonic acid (manufactured by Asahi Kasei Finechem Co., Ltd.) was used, a use amount of N,N'-methylenebisacrylamide was 0.2 parts by weight, a use amount of partially saponified polyvinyl alcohol JP-15 was 8 parts by weight, a use amount of glycerol was 26.67 parts by weight, and a use amount of ion-exchanged water was 45.13 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 321 parts by weight of an aqueous potassium hydroxide solution was obtained.

(Example 7b)

According to the same manner as that of Example 3b except that a use amount of N,N'-methylenebisacrylamide was 0.2 parts by weight, a use amount of partially saponified polyvinyl alcohol JP-15 was 12 parts by weight, and a use amount of ion-exchanged water was 67.80 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 332 parts by weight of an aqueous potassium hydroxide solution was obtained.

(Example 8b)

According to the same manner as that of Example 1b except that a use amount of N,N'-methylenebisacrylamide was 0.04 parts by weight, a use amount of partially saponified polyvinyl alcohol JP-15 was 8 parts by weight, a use amount of glycerol was 26.67 parts by weight, and a use amount of ion-exchanged water was 45.29 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 413 parts by weight of an aqueous potassium hydroxide solution was obtained.

(Example 9b)

According to the same manner as that of Example 1b except that the partially saponified polyvinyl alcohol was changed from JP-15 to 8 parts by weight of GL-05 (manufactured by Nippon Synthesis Chemical Industry Co., Ltd., saponification degree 88.5 mol%, average polymerization degree 500), a use amount of glycerol was 26.67 parts by weight, and a use amount of ion-exchanged water was 45.21 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 372 parts by weight of an aqueous potassium hydroxide solution was obtained.

(Example 10b)

According to the same manner as that of Example 9b except that a use amount of GL-05 was 14 parts by weight, a use amount of glycerol was 13.50 parts by weight, and a use amount of ion-exchanged water was 52.38 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 323 parts by weight of an aqueous potassium hydroxide solution was obtained.

(Example 11b)

According to the same manner as that of Example 1b except that the partially saponified polyvinyl alcohol was changed from JP-15 to 4 parts by weight of PVA-613 (manufactured by Kuraray Co., Ltd., saponification degree 93.5 mol%, average polymerization degree 1,300), glycerol was not used, and a use amount of ion-exchanged water was 75.88 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 457 parts by weight of an aqueous potassium hydroxide solution was obtained.

(Example 12b)

According to the same manner as that of Example 1b except that the partially saponified polyvinyl alcohol was changed from JP-15 to 4 parts by weight of PVA-CST (manufactured by Kuraray Co., Ltd., saponification degree 96 mol%, average polymerization degree 1,700), glycerol was not used, and a use amount of ion-exchanged water was 75.88 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 443 parts by weight of an aqueous potassium hydroxide solution was obtained.

(Comparative Example 1b)

According to the same manner as that of Example 1b except that the polyfunctional monomer and the polyvinyl alcohol were not used, a use amount of glycerol was 60 parts by weight, and a use amount of ion-exchanged water was 20 parts by weight, a hydrogel precursor was obtained.

When this hydrogel precursor was irradiated with ultraviolet rays as in Example 1b, the precursor was not gelled and a hydrogel was not obtained.

(Comparative Example 2b)

According to the same manner as that of Example 1b except that polyvinyl alcohol was not used, a use amount of N,N'-methylenebisacrylamide was 0.04 parts by weight, a use amount of glycerol was 60 parts by weight, and a use amount of ion-exchanged water was 19.96 parts by weight, a hydrogel sheet was obtained.

When the hydrogel sheet after polymerization was immersed in a 4M aqueous potassium hydroxide solution at room temperature for 24 hours, the hydrogel sheet was liquefied and a sheet shape could not be retained.

(Comparative Example 3b)

20 parts by weight of crosslinked polyacrylic acid particles composed of a fine powder having a particle diameter of 20 to 50 $\mu$m (Junron PW-120, manufactured by Toagosei Co., Ltd.), 8 parts by weight of partially saponified polyvinyl alcohol JP-15, and 600 parts by weight of ion-exchanged water were added and stirred for 72 hours, and thereby, a dilute aqueous solution of a mixture of crosslinked polyacrylic acid particles and polyvinyl alcohol was prepared. This aqueous solution was poured into a silicone frame, naturally dried until an amount of ion-exchanged water became 72 parts by weight, and rolled with a pressing machine to the thickness of 4 mm, thereby, a hydrogel sheet was obtained.

When an alkali immersion step was performed as in Example 1b, the hydrogel sheet containing an alkali component, which had absorbed 435 parts by weight of an aqueous potassium hydroxide solution was obtained.

[Table 3]

| Constituent amount | | Unit | Example | | | | | | | | | |
|---|---|---|---|---|---|---|---|---|---|---|---|---|
| | | | 1b | 2b | 3b | 4b | 5b | 6b | 7b | 8b | 9b | 10b |
| Monofunctional monomer | Acrylic acid | Parts by weight | 20 | 20 | 20 | 20 | 20 | - | 20 | 20 | 20 | 20 |
| | Vinylsulfonic acid | | - | - | - | - | - | 20 | - | - | - | - |
| Polyfunctional monomer | N,N'-methylenebisacrylamide | | 0.12 | 0.12 | 0.12 | - | 0.4 | 0.2 | 0.2 | 0.04 | 0.12 | 0.12 |
| | Divinylbenzene | | - | - | - | 0.30 | - | - | - | - | - | - |
| Polyvinyl alcohol-based polymer | GL-05 Average polymerization degree: 500 Saponification degree: 88.5 mol% | | - | - | - | - | - | - | - | - | 8 | 14 |
| | JP-15 Average polymerization degree: 1,500 Saponification degree: 88.5 mol% | | 5 | 8 | 8 | 3 | 8 | 8 | 12 | 8 | - | - |
| | PVA-613 Average polymerization degree: 1,300 Saponification degree: 93.5 mol% | | - | - | - | - | - | - | - | - | - | - |

(continued)

| | | | 30 | 25 | | 20 | 15 | | 10 | 5 | |
|---|---|---|---|---|---|---|---|---|---|---|---|
| | | PVA-CST<br>  Average polymerization degree: 1,700<br>  Saponification degree: 96.0 mol% | - | - | - | - | - | - | - | - | - | - |
| | | JC-33<br>  Average polymerization degree: 3,300<br>  Saponification degree: 99.0 mol% | - | - | - | - | - | - | - | - | - | - |
| | Crosslinked polyacrylic acid particles | Junron PW-120 | - | - | - | - | - | - | - | - | - | - |
| | Polyhydric alcohol | Glycerol | 46.54 | 26.67 | - | 60 | 26.67 | 26.67 | - | 26.67 | 26.67 | 13.50 |
| | Ion-exchanged water | | 28.34 | 45.21 | 71.88 | 16.70 | 44.93 | 45.13 | 67.80 | 45.29 | 45.21 | 52.38 |
| | Alkali absorption amount | | 391 | 322 | 350 | 360 | 267 | 321 | 332 | 413 | 372 | 323 |
| Evaluation | Tensile test | Breaking strength (kPa) | 75.04 | 135.7 | 140.5 | 45.53 | 98.88 | 102.3 | 82.65 | 74.23 | 58.3 | 44.1 |
| | | Breaking elongation (%) | 482 | 401 | 468 | 520 | 262 | 572 | 160 | 651 | 317 | 163 |
| | Swelling test | Swelling degree in 4M aqueous KOH solution (%) | 489 | 402 | 437 | 430 | 334 | 402 | 413 | 504 | 466 | 380 |
| | | Swelling degree in ion-exchanged water (%) | 12726 | 8611 | 10623 | 4967 | 2803 | 7203 | 5953 | 16252 | 12860 | 8854 |
| | | (Swelling degree in 4M aqueous KOH solution)/ (Swelling degree in ion-exchanged water) | 0.038 | 0.047 | 0.041 | 0.087 | 0.120 | 0.056 | 0.070 | 0.031 | 0.036 | 0.043 |

EP 3 315 561 A1

[Table 4]

| Constituent amount | | | Unit | Example | | Comparative Exam ple | | |
|---|---|---|---|---|---|---|---|---|
| | | | | 11b | 12b | 1b | 2b | 13b |
| | Monofunctional monomer | Acrylic acid | Parts by weight | 20 | 20 | 20 | 20 | - |
| | | Vinylsulfonic acid | | - | - | - | - | - |
| | Polyfunctional monomer | N,N'-methylenebisacrylamide | | 0.12 | 0.12 | - | 0.04 | - |
| | | Divinylbenzene | | - | - | - | - | - |
| | Polyvinyl alcohol-based polymer | GL-05<br><br>    Average polymerization degree: 500<br>    Saponification degree: 88.5 mol% | | - | - | - | - | - |
| | | JP-15<br>    Average polymerization degree: 1,500<br>    Saponification degree: 88.5 mol% | | - | - | - | - | 8 |
| | | PVA-613<br>    Average polymerization degree: 1,300<br>    Saponification degree: 93.5 mol% | | 4 | - | - | - | - |
| | | PVA-CST<br>    Average polymerization degree: 1,700<br>    Saponification degree: 96.0 mol% | | - | 4 | - | - | - |
| | | JC-33<br>    Average polymerization degree: 3,300 | | - | - | - | - | - |

| | | | | | Not gelled | Liquefied | |
|---|---|---|---|---|---|---|---|
| | | Saponification degree: 99.0 mol% | | | | | |
| | Crosslinked polyacrylic acid particles | Junron PW-120 | - | - | - | - | 20 |
| | Polyhydric alcohol | Glycerol | - | - | 60 | 60 | - |
| | Ion-exchanged water | | 75.88 | 75.88 | 20 | 19.96 | 72 |
| | Alkali absorption amount | | 457 | 443 | Not gelled | Liquefied | 435 |
| Evaluation | Tensile test | Breaking strength (kPa) | 44.1 | 60.5 | | 3.89 | 27.17 |
| | | Breaking elongation (%) | 735 | 825 | | 655 | 69.5 |
| | Swelling test | Swelling degree in 4M aqueous KOH solution (%) | 587 | 576 | | Unmeasurable | 549 |
| | | Swelling degree in ion-exchanged water (%) | 15936 | 15305 | | | Liquefied |
| | | (Swelling degree in 4M aqueous KOH solution)/ (Swelling degree in ion-exchanged water) | 0.037 | 0.038 | | | Unmeasurable |

From Tables 3 and 4, it is seen that, in Examples 1b to 12b, when the hydrogel including water, a polyvinyl alcohol-based polymer, and a polymer matrix containing the water and the polyvinyl alcohol-based polymer, wherein the polymer matrix contains the copolymer of the monofunctional monomer having one ethylenically unsaturated group and the polyfunctional monomer having 2 to 6 ethylenically unsaturated groups, the copolymer has a hydrophilic group binding to its main chain, the polymer matrix is contained at 1 to 30 parts by weight in 100 parts by weight of the hydrogel, the polymer derived from the polyfunctional monomer is contained at the ratio of 0.1 to 5 parts by weight in 100 parts by weight of the copolymer, and the polyvinyl alcohol-based polymer is contained at 10 to 150 parts by weight based on 100 parts by weight of the polymer matrix, is made to contain water in 100 parts by weight of the hydrogel so that the total content of the polymer matrix and the polyvinyl alcohol-based polymer becomes 10 parts by weight, it exhibits the tensile breaking strength of 10 kPa or more (further, 30 kPa or more) and the tensile breaking elongation of 100% or more.

(Examples 13b)

According to the same manner as that of Example 1b except that the polyfunctional monomer was changed from N,N'-methylenebisacrylamide to 0.30 parts by weight of sodium divinylbenzenesulfonate (manufactured by Tosoh Organic Chemical Co., Ltd.), glycerol was not used, and a use amount of ion-exchanged water was 74.70 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 405 parts by weight of an aqueous potassium hydroxide solution was obtained.

(Example 14b)

According to the same manner as that of Example 13b except that the gel strength improving agent was changed from partially saponified polyvinyl alcohol to 25 parts by weight of RHEOCRYSTA I-2SP (manufactured by DKS Co., Ltd., average fiber diameter 11.5 nm, polymerization degree 550, specific surface area (BET method) 650 $m^3/g$) which is a 2.0% by weight aqueous cellulose nanofiber dispersion, and a use amount of ion-exchanged water was 54.7 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 490 parts by weight of an aqueous potassium hydroxide solution was obtained.

(Example 15b)

According to the same manner as that of Example 14b except that, further, 5 parts by weight of partially saponified polyvinyl alcohol JP-15 was added and a use amount of ion-exchanged water was 49.7 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 382 parts by weight of an aqueous potassium hydroxide solution was obtained.

(Example 16b)

According to the same manner as that of Example 14b except that the 2.0% by weight aqueous cellulose nanofiber dispersion was changed from RHEOCRYSTA I-2SF to BiNFi-s IMa-100 (manufactured by SUGINO MACHINE LIMITED, number average fiber diameter 28.7 nm, polymerization degree 800, specific surface area (BET method) 120 $m^2/g$), a hydrogel sheet was obtained.

When the hydrogel sheet after polymerization was immersed in a 4M aqueous potassium hydroxide solution at room temperature for 24 hours, the hydrogel sheet containing an alkali component, which had absorbed 432 parts by weight of an aqueous potassium hydroxide solution was obtained.

(Example 17b)

According to the same manner as that of Example 16b except that, further, 5 parts by weight of partially saponified polyvinyl alcohol JP-15 was added and a use amount of ion-exchanged water was 49.7 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 298 parts by weight of an aqueous potassium hydroxide solution was obtained.

(Example 18b)

According to the same manner as that of Example 14b except that the 2.0% by weight aqueous cellulose nanofiber dispersion was changed from RHEOCRYSTA I-2SP to BiNFi-s AMa-100 (manufactured by SUGINO MACHINE LIMITED, average fiber diameter 21.2 nm, polymerization degree 200, specific surface area (BET method), 150 m$^3$/g), a hydrogel sheet was obtained.
When the hydrogel after polymerization was immersed in a 4M aqueous potassium hydroxide solution at room temperature for 24 hours, the hydrogel sheet containing an alkali component, which had absorbed 463 parts by weight of an aqueous potassium hydroxide solution was obtained.

(Example 19b)

According to the same manner as that of Example 18b except that, further, 5 parts by weight of partially saponified polyvinyl alcohol JP-15 was added and a use amount of ion-exchanged water was 49.7 parts by weight, a hydrogel sheet was obtained.
When the hydrogel after polymerization was immersed in a 4M aqueous potassium hydroxide solution at room temperature for 24 hours, the hydrogel sheet containing an alkali component, which had absorbed 336 parts by weight of an aqueous potassium hydroxide solution was obtained.

(Comparative Example 4b)

According to the same manner as that of Example 13b except that the gel strength improving agent was not used and a use amount of ion-exchanged water was 79.7 parts by weight, a hydrogel sheet was obtained.
When the hydrogel after polymerization was immersed in a 4M aqueous potassium hydroxide solution, the hydrogel sheet containing an alkali component, which had absorbed 929 parts by weight of an aqueous potassium hydroxide solution was obtained.
Constituent amounts of raw materials and the results of the above-mentioned Examples and Comparative Examples are shown altogether in Table 5.

[Table 5]

| Constituent amount | | | Unit | Example | | | | | | | Comparative Example |
|---|---|---|---|---|---|---|---|---|---|---|---|
| | | | | 13b | 14b | 15b | 16b | 17b | 18b | 19b | 4b |
| | Monofunctional monomer | Acrylic acid | Parts by weight | 20 | 20 | 20 | 20 | 20 | 20 | 20 | 20 |
| | Polyfunctional monomer | Sodium divinylbenzenesulfonate | | 0.3 | 0.3 | 0.3 | 0.3 | 0.3 | 0.3 | 0.3 | 0.3 |
| | Polyvinyl alcohol-based polymer | JP-15 Average polymerization degree: 1,500 Saponification degree: 88.5 mol% | | 5 | - | 5 | - | - | - | 5 | - |
| | Cellulose nanofiber | RHEOCRYSTAI-2SP Average fiber diameter: 11.5 nm | | - | 25 | 25 | - | - | - | - | - |
| | | BiNFi-s IMa Average fiber diameter: 28.7 nm | | - | - | - | 25 | - | - | - | - |
| | | BiNFi-s AMa Average fiber diameter: 21.2 nm | | - | - | - | - | 25 | 25 | 25 | - |
| | Ion-exchanged water | | | 74.7 | 54.7 | 49.7 | 54.7 | 49.7 | 54.7 | 49.7 | 79.7 |
| Evaluation | Alkali absorption amount | | | 405 | 490 | 382 | 432 | 298 | 463 | 336 | 829 |
| | Tensile test | Breaking strength (kPa) | | 22.8 | 16.6 | 49.34 | 18.7 | 31.3 | 17.6 | 25.6 | 3.1 |
| | | Breaking elongation (%) | | 410 | 360 | 450 | 380 | 435 | 320 | 720 | 320 |
| | Swelling test | Swelling degree in 4M aqueous KOH solution (%) | | 505 | 555 | 482 | 581 | 371 | 563 | 436 | 1008 |
| | | Swelling degree in ion-exchanged water (%) | | 8965 | 12919 | 7684 | 10428 | 8015 | 11183 | 9595 | 16050 |
| | | (Swelling degree in 4M aqueous KOH solution)/ (Swelling degree in ion-exchanged water) | | 0.056 | 0.043 | 0.0627 | 0.055 | 0.046 | 0.050 | 0.045 | 0.0627 |

From Table 5, it is seen that, in Examples 13b to 19b, when the hydrogel in which the gel strength improving agent is the polyvinyl alcohol-based polymer and/or the cellulose nanofiber is made to contain water in 100 parts by weight of the hydrogel so that the total content of the polymer matrix and the gel strength improving agent becomes 10 parts by weight as in Examples 1 to 12, it exhibits the tensile breaking strength of 10 kPa or more and the tensile breaking elongation of 100% or more.

(Example 1c)

20 parts by weight of acrylic acid (manufactured by Nippon Shokubai Co., Ltd.), 0.30 parts by weight of sodium divinylbenzenesulfonate (manufactured by Tosoh Organic Chemical Co., Ltd.), 1 part by weight of magnesium aluminate metasilicate (manufactured by Fuji Chemical Industries Co., Ltd.), 78.70 parts by weight of ion-exchanged water, and 0.20 parts by weight of Irgacure 1173 (manufactured by BASF Japan) as a polymerization initiator were mixed to prepare a hydrogel precursor. Then, a silicone frame having the thickness of 2 mm was placed on a peelable PET film, and the hydrogel precursor was poured into the frame. Thereafter, the peelable PET film was placed on the hydrogel precursor, thereby, a sheet-like hydrogel precursor was obtained. Thereafter, a step of irradiating ultraviolet rays of 1,500 mJ/cm$^2$ with a small UV polymerizing machine (J-cure1500, metal halide lamp type name MJ-1500L, manufactured by JATEC Co., Ltd.) under the condition of a conveyer speed of 0.4 m/min and a distance between works of 150 mm was performed three times, thereby, a hydrogel sheet having the thickness of 2 mm was prepared.

When the hydrogel sheet after polymerization was immersed in a 4M aqueous potassium hydroxide solution at room temperature for 24 hours, the hydrogel sheet containing an alkali component, which had absorbed 520 parts by weight of an aqueous potassium hydroxide solution was obtained.

(Example 2c)

According to the same manner as that of Example 1c except that 0.30 parts by weight of pentaerythritol triallyl ether (manufactured by Osaka Soda Co., Ltd.) was used in place of sodium divinylbenzenesulfonate, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 982 parts by weight of an aqueous potassium hydroxide solution was obtained.

(Example 3c)

According to the same manner as that of Example 1c except that hydrotalcite (manufactured by Wako Pure Chemical Industries, Ltd.) was used in place of magnesium aluminate metasilicate, a use amount of sodium divinylbenzenesulfonate was 0.20 parts by weight, and 78.80 parts by weight of ion-exchanged water was used, a hydrogel was obtained.

When the hydrogel sheet after polymerization was immersed in a 4M aqueous potassium hydroxide solution at room temperature for 24 hours, the hydrogel sheet containing an alkali component, which had absorbed 530 parts by weight of an aqueous potassium hydroxide solution was obtained.

(Example 4c)

According to the same manner as that of Example 1c except that itaconic acid (manufactured by Wako Pure Chemical Industries, Ltd.) was used in place of acrylic acid, 0.15 parts by weight of sodium divinylbenzenesulfonate was used, 0.6 parts by weight of magnesium aluminate metasilicate was used, and 79.25 parts by weight of ion-exchanged water was used, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 460 parts by weight of an aqueous potassium hydroxide solution was obtained.

(Example 5c)

According to the same manner as that of Example 1c except that 0.08 parts by weight of divinylbenzene (manufactured by Nippon Steel & Sumikin Chemical Co., Ltd.) was used in place of sodium divinylbenzenesulfonate, 18.92 parts by weight of ion-exchanged water was used, and further, glycerol was added to the hydrogel precursor at 60 parts by weight, a hydrogel sheet was obtained.

When the hydrogel sheet after polymerization was immersed in a 4M aqueous potassium hydroxide solution at room temperature for 24 hours, the hydrogel sheet containing an alkali component, which had absorbed 640 parts by weight of an aqueous potassium hydroxide solution was obtained.

(Example 6c)

According to the same manner as that of Example 1c except that 18 parts by weight of acrylic acid and 2.0 parts by weight of 2-acrylamido-2-methylpropanesulfonic acid were used in place of 20 parts by weight of acrylic acid, a use amount of sodium divinylbenzenesulfonate was 0.20 parts by weight, and 78.80 parts by weight of ion-exchanged water was used, a hydrogel sheet was obtained.
When the hydrogel sheet after polymerization was immersed in a 4M aqueous potassium hydroxide solution at room temperature for 24 hours, the hydrogel sheet containing an alkali component, which had absorbed 321 parts by weight of an aqueous hydroxide solution was obtained.

(Comparative Example 1c)

According to the same manner as that of Example 1c except that magnesium aluminate metasilicate was not used and an amount of ion-exchanged water was 79.70 parts by weight, a hydrogel sheet was obtained.
When the hydrogel sheet after polymerization was immersed in a 4M aqueous potassium hydroxide solution at room temperature for 24 hours, the hydrogel sheet containing an alkali component, which had absorbed 332 parts by weight of an aqueous potassium hydroxide solution was obtained.

(Comparative Example 2c)

According to the same manner as that of Example 1c except that sodium divinylbenzenesulfonate was not used and an amount of ion-exchanged water was 79.00 parts by weight, a hydrogel sheet was obtained.
When the hydrogel sheet after polymerization was immersed in a 4M aqueous potassium hydroxide solution at room temperature for 24 hours, the hydrogel sheet was liquefied.

(Comparative Example 3c)

20 parts by weight of crosslinked polyacrylic acid particles composed of a fine powder having a particle diameter of 20 to 50 $\mu$m (Junron PW-120, manufactured by Toagosei Co., Ltd.) and 600 parts by weight of ion-exchanged water were mixed and stirred for 72 hours, thereby, a dilute aqueous crosslinked polyacrylic acid solution was prepared. This aqueous solution was poured into a silicone frame, naturally dried until an amount of ion-exchanged water became 80 parts by weight, and rolled with a pressing machine to the thickness of 2 mm, a hydrogel sheet was obtained.
When an alkali immersion step was performed as in Example 1c, the hydrogel sheet containing an alkali component, which had absorbed 312 parts by weight of an aqueous potassium hydroxide solution was obtained.

(Comparative Example 4c)

100 parts by weight of a 20 % by weight aqueous polyacrylic acid solution (Jurymer AC-20H, manufactured by Toagosei Co., Ltd.) and 1.0 part by weight of magnesium aluminate metasilicate were mixed, the mixed solution was poured into a silicone frame after stirring for 5 minutes, rolled with a pressing machine to the thickness of 2 mm, and allowed to stand for 72 hours, thereby, a hydrogel sheet in which a crosslinked structure due to magnesium aluminate metasilicate is introduced was obtained.
When an alkali immersion step was performed as in Example 1c, the hydrogel was liquefied at the time point at which 323 parts by weight of an aqueous hydroxide solution was absorbed.
Constituent amounts of raw materials and the results of the above-mentioned Examples and Comparative Examples are shown altogether in Tables 6 and 7.

[Table 6]

| Constituent amount | | | Unit | Example | | | | | |
|---|---|---|---|---|---|---|---|---|---|
| | | | | 1c | 2c | 3c | 4c | 5c | 6c |
| | Monofunctional monomer | Acrylic acid | Part by weight | 20 | 20 | 20 | - | 20 | 18 |
| | | Itaconic acid | | - | - | - | 20 | - | - |
| | | 2-Acrylamido-2-methylpropanesulfonic acid | | - | - | - | - | - | 2.0 |
| | Polyfunctional monomer | Sodium divinylbenzenesulfonate | | 0.30 | - | 0.20 | 0.15 | - | 0.20 |
| | | Pentaerythritol triallyl ether | | - | 0.30 | - | - | - | - |
| | | Divinylbenzene | | - | - | - | - | 0.08 | - |
| | Polyvalent Ion -Containing Compound | Magnesium aluminate metasilicate | | 1.0 | 1.0 | - | 0.6 | 1.0 | 1.0 |
| | | Hydrotalcite | | - | - | 1.0 | - | - | - |
| | Polyhydric alcohol | Glycerol | | - | - | - | - | 60 | - |
| | Ion-exchanged water | | | 78.70 | 78.70 | 78.80 | 79.25 | 18.92 | 78.80 |
| | Aqueous alkali solution absorption amount | | | 520 | 982 | 530 | 460 | 640 | 321 |
| Evaluation | Tension permanent set under 100% constant elongation (%) | | | 3.2 | 6.7 | 4.1 | 8.1 | 0.4 | 4.3 |
| | Tensile test | Breaking strength (kPa) | | 123.8 | 147.7 | 140.5 | 42.36 | 172.3 | 65.27 |
| | | Breaking elongation (%) | | 461 | 956 | 468 | 409 | 1053 | 542 |

[Table 7]

| Constituent amount | | | Unit | Comparative Example | | | |
|---|---|---|---|---|---|---|---|
| | | | | 1c | 2c | 3c | 4c |
| | Monofunctional monomer | Acrylic acid | Part by weight | 20 | 20 | - | - |
| | Polyfunctional monomer | Sodium divinylbenzenesulfonate | | 0.30 | - | - | - |
| | Polyvalent ion-containing compound | Magnesium aluminate metasilicate | | - | 1.0 | - | 1.0 |
| | Crosslinked polyacrylic acid particles | Junron PW-120 | | - | - | 20 | - |
| | Polyacrylic acid particles | Jurymer AC-20H (20% by weight aqueous solution) | | - | - | - | 20 |
| | Ion-exchanged water | | | 79.70 | 79.00 | 80.00 | 80.00 |
| | Aqueous alkali solution absorption amount | | | 332 | Liquefied | 312 | Liquefied |
| Evaluation | Tension permanent set under 100% constant elongation (%) | | | Unmeasurable | 16.7 | Unmeasurable | Unmeasurable |
| | Tensile test | Breaking strength (kPa) | | 3.56 | 6.4 | 3.46 | 15.3 |
| | | Breaking elongation (%) | | 360 | 802 | 86 | 236 |

From Tables 6 and 7, it is seen that the hydrogels of Examples 1c to 6c exhibit the tension permanent set under 100% constant elongation of 10% or less, the tensile breaking strength of 30 kPa or more, and the tensile breaking elongation of 200% or more.

**Claims**

1. A hydrogel comprising water, a gel strength improving agent, and a polymer matrix containing the water and the gel strength improving agent,
   wherein
   said polymer matrix includes a copolymer of a monofunctional monomer having one ethylenically unsaturated group and a polyfunctional monomer having 2 to 6 ethylenically unsaturated groups,
   said copolymer has a hydrophilic group binding to its main chain, and
   said hydrogel has a breaking strength of 5 kPa or more and a breaking elongation of 200% or more in a tensile test.

2. The hydrogel according to claim 1, wherein the gel strength improving agent is selected from a polyhydric alcohol, a polyvalent ion-containing compound, a polyvinyl alcohol-based polymer, and a cellulose nanofiber.

3. The hydrogel according to claim 1, having a sheet-like form and comprising, water, a polyhydric alcohol as a gel strength improving agent, and a polymer matrix containing the water and the polyhydric alcohol,
   wherein
   said polymer matrix includes a copolymer of a monofunctional monomer having one ethylenically unsaturated group and a polyfunctional monomer having 2 to 6 ethylenically unsaturated groups,
   said copolymer has no ester bond and no amide bond in its main chain, and has a hydrophilic group binding to said main chain,
   said polymer matrix is contained at 1 to 30 parts by weight in 100 parts by weight of said hydrogel,
   a polymer derived from said polyfunctional monomer is contained at a ratio of 0.1 to 5 parts by weight in 100 parts by weight of said copolymer, and
   said hydrogel has a breaking strength of 5 kPa or more and a breaking elongation of 200% or more in a tensile test.

4. The hydrogel according to claim 3, wherein the polyhydric alcohol as said gel strength improving agent is contained at 20 to 70 parts by weight in 100 parts by weight of said hydrogel.

5. The hydrogel according claim 1, comprising water, a polyvinyl alcohol-based polymer and/or a cellulose nanofiber as a gel strength improving agent, and a polymer matrix containing the water and the polyvinyl alcohol-based polymer and/or the cellulose nanofiber,
   wherein
   said polymer matrix includes a copolymer of a monofunctional monomer having one ethylenically unsaturated group and a polyfunctional monomer having 2 to 6 ethylenically unsaturated groups,
   said copolymer has a hydrophilic group binding to its main chain,
   said polymer matrix is contained at 1 to 30 parts by weight in 100 parts by weight of said hydrogel,
   a polymer derived from said polyfunctional monomer is contained at a ratio of 0.1 to 5 parts by weight in 100 parts by weight of said copolymer,
   when the polyvinyl alcohol-based polymer is contained as the gel strength improving agent, said polyvinyl alcohol-based polymer is contained at 10 to 150 parts by weight based on 100 parts by weight of said polymer matrix,
   when the cellulose nanofiber is contained as the gel strength improving agent, said cellulose nanofiber is contained at 1.0 to 50 parts by weight based on 100 parts by weight of said polymer matrix, and
   when water is contained in 100 parts by weight of said hydrogel so that a total content of the polymer matrix and the gel strength improving agent becomes 10 parts by weight, said hydrogel exhibits a tensile breaking strength of 10 kPa or more and a tensile breaking elongation of 100% or more.

6. The hydrogel according to claim 5, wherein said hydrogel exhibits a swelling degree of 600% or less in a 4M aqueous potassium hydroxide solution and exhibits (swelling degree in 4M aqueous potassium hydroxide solution)/(swelling degree in ion-exchanged water) of 0.2 or less.

7. The hydrogel according to claim 5, wherein said polyvinyl alcohol-based polymer is a partial saponification product of polyvinyl alcohol, exhibits an average polymerization degree of 500 to 3,000, and exhibits a saponification degree of 80 to 97 mol%.

**8.** The hydrogel according to claim 5, wherein said cellulose nanofiber exhibits an average fiber diameter of 1 to 200 nm.

**9.** The hydrogel according to claim 5, wherein said hydrogel comprises a polyhydric alcohol.

**10.** The hydrogel according to claim 1, comprising water, a polyvalent ion-containing compound as a gel strength improving agent, and a polymer matrix containing the water and the polyvalent ion-containing compound, wherein
said polymer matrix includes a copolymer of a monofunctional monomer having one ethylenically unsaturated group and a polyfunctional monomer having 2 to 6 ethylenically unsaturated groups,
said monofunctional monomer has a hydrophilic group, and
when water is contained in 100 parts by weight of said hydrogel so that a total content of the polymer matrix and the polyvalent ion-containing compound becomes 20 parts by weight, said hydrogel exhibits a tensile breaking strength of 30 kPa or more and a tensile breaking elongation of 200% or more.

**11.** The hydrogel according to claim 10, wherein said hydrophilic group comprises at least a carboxyl group.

**12.** The hydrogel according to claim 10, wherein
said polymer matrix is contained at 1 to 30 parts by weight in 100 parts by weight of said hydrogel,
a polymer derived from said polyfunctional monomer is contained at a ratio of 0.1 to 5 parts by weight in 100 parts by weight of said copolymer, and
said polyvalent ion-containing compound is contained at 0.5 to 15 parts by weight in 100 parts by weight of said hydrogel.

**13.** The hydrogel according to claim 10, wherein said hydrogel has a tension permanent set under 100% constant elongation of 10% or less.

**14.** The hydrogel according to claim 10, wherein said polyvalent ion-containing compound is selected from the group consisting of a metasilicic acid compound, a (meta)silicate mineral, a sulfide mineral, an oxide mineral, a hydroxide mineral, a carbonate mineral, a nitrate mineral, a borate mineral, a sulfate mineral, a chromate mineral, a phosphate mineral, an arsenate mineral, a vanadate mineral, a tungstate mineral, and a molybdate mineral, which contain Al.

**15.** The hydrogel according to claim 1, wherein said hydrogel further comprises an alkali component dissolved in said water.

**16.** The hydrogel according to claim 15, wherein a 25% compression strength when the alkali component is contained is 90% or more of a 25% compression strength when the alkali component is not contained.

**17.** The hydrogel according to claim 1, wherein said monofunctional monomer is selected from (meth)acrylic acid, (meth)acrylamide, sodium (meth)acrylate, potassium (meth)acrylate, zinc (meth)acrylate, dimethyl(meth)acrylamide, vinylsulfonic acid, sodium vinylsulfonate, p-styrenesulfonic acid, sodium p-styrenesulfonate, allylsulfonic acid, sodium allylsulfonate, 2-(meth)acrylamido-2-methylpropanesulfonic acid, 3-((meth)acryloyloxy)-1-propanesulfonic acid, potassium 3-((meth)acryloyloxy)-1-propanesulfonate, 3-((meth)acryloyloxy)-2-methyl-1-propanesulfonic acid, potassium 3-((meth)acryloyloxy)-2-methyl-1-propanesulfonate, N-vinylacetamide, N-vinylformamide, allylamine, 2-vinylpyridine, and 4-vinylpyridine, and said polyfunctional monomer is selected from the group consisting of divinylbenzene, divinylbiphenyl, divinylsulfone, diethylene glycol divinyl ether, pentaerythritol triallyl ether, pentaerythritol tetraallyl ether, dimethyldiallylammonium chloride, N,N'-methylenebis(meth)acrylamide, ethylene glycol di(meth)acrylate, glycerol tri(meth)acrylate, polyethylene glycol di(meth)acrylate, polypropylene glycol di(meth)acrylate, and polyglycerol di(meth)acrylate.

**18.** A method for producing the hydrogel as defined in claim 1, the method comprising the steps of:

preparing a hydrogel precursor including water, a gel strength improving agent, a monofunctional monomer having one ethylenically unsaturated group, a polyfunctional monomer having 2 to 6 ethylenically unsaturated groups, and a polymerization initiator; and
polymerizing said monofunctional monomer and said polyfunctional monomer to obtain a hydrogel.

**19.** The method for producing the hydrogel according to claim 18, wherein
said hydrogel further comprises an alkali component dissolved in said water, and

said alkali component is dissolved in said water by immersing the hydrogel after polymerization in an aqueous alkali solution.

## INTERNATIONAL SEARCH REPORT

| International application No. |
| --- |
| PCT/JP2016/076707 |

**A. CLASSIFICATION OF SUBJECT MATTER**
*C08L101/00*(2006.01)i, *C08F2/44*(2006.01)i, *C08J3/075*(2006.01)i, *C08K3/00* (2006.01)i, *C08K5/053*(2006.01)i

According to International Patent Classification (IPC) or to both national classification and IPC

**B. FIELDS SEARCHED**

Minimum documentation searched (classification system followed by classification symbols)
C08L101/00, C08F2/44, C08J3/075, C08K3/00, C08K5/053

Documentation searched other than minimum documentation to the extent that such documents are included in the fields searched
Jitsuyo Shinan Koho 1922–1996 Jitsuyo Shinan Toroku Koho 1996–2016
Kokai Jitsuyo Shinan Koho 1971–2016 Toroku Jitsuyo Shinan Koho 1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2007-84710 A (Sekisui Plastics Co., Ltd.), 05 April 2007 (05.04.2007), | 1-4,10-13, 17,18 |
| A | claims; paragraphs [0021] to [0024], [0038], [0039]; examples (Family: none) | 5-9,14-16,19 |
| X | JP 2015-59184 A (Sekisui Plastics Co., Ltd.), 30 March 2015 (30.03.2015), | 1-7,9,10,12, 13,17,18 |
| A | claims; paragraphs [0014] to [0023], [0027], [0028], [0033], [0035]; examples (Family: none) | 8,11,14-16, 19 |
| X | JP 2010-95586 A (Kawamura Institute of Chemical | 1,2,10,12-19 |
| A | Research), 30 April 2010 (30.04.2010), paragraphs [0018], [0021]; examples (Family: none) | 3-9,11 |

☒ Further documents are listed in the continuation of Box C. ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 30 September 2016 (30.09.16) | Date of mailing of the international search report 11 October 2016 (11.10.16) |
| --- | --- |
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

**INTERNATIONAL SEARCH REPORT**

| International application No. |
|---|
| PCT/JP2016/076707 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2014-181276 A  (Sekisui Plastics Co., Ltd.),<br>29 September 2014 (29.09.2014),<br>claims; paragraphs [0020], [0023], [0036],<br>[0040], [0043]; examples<br>(Family: none) | 1-7,9,17,18<br>8,10-16,19 |
| X<br>A | JP 2013-535232 A  (Ecole Polytechnique Federale<br>de Lausanne),<br>12 September 2013 (12.09.2013),<br>claims; examples<br>& US 2013/0261208 A1<br>claims; examples<br>& WO 2012/001629 A1     & EP 2588036 A1 | 1,2,5,6,8,18<br>3,4,7,9-17,<br>19 |

Form PCT/ISA/210 (continuation of second sheet) (January 2015)

**REFERENCES CITED IN THE DESCRIPTION**

**Patent documents cited in the description**

- WO 2002023663 A
- JP 2007227032 A
- JP 2005322635 A
- JP 2003178797 A